# EUROPEAN PATENT APPLICATION

(11) **EP 2 128 520 A1**
(43) Date of publication of application: **02.12.2009**
(21) Application number: 08711562.2
(22) Date of filing: 19.02.2008
(51) Int. Cl.: F21V 5/02, A01G 7/00, F21V 5/04, F21V 8/00

(54) **LIGHT SOURCE APPARATUS, LIGHTING APPARATUS USING THE LIGHT SOURCE APPARATUS, AND PLANT GROWING APPARATUS USING LIGHTING APPARATUS**

(30) Priority: 20.02.2007 JP 2007039395
(71) Applicant: Oyama, Nobuo, Suginami-ku Tokyo 167-0031 (JP)
(72) Inventor: Oyama, Nobuo, Suginami-ku Tokyo 167-0031 (JP)
(74) Representative: Hocking, Adrian Niall
(86) International application number: PCT/JP2008/052738
(87) International publication number: WO 2008/102762

(57) **Abstract**

Light emitted from an LED lamp (1) substantially vertically enters the face of the first light diffusion structural member (2) to be diffused within a predetermined plane (P) perpendicular to a longitudinal direction of a linear ridges of the light diffusion structural member (2), and enters the face of the second light diffusion structural member (3) as the flat light flux having a predetermined diverging angle. An incident angle to the second light diffusion structural member (3) varies according to the angle of light, which has passed through the first light diffusion structural member (2). However, light diffusion in the width direction (W) is suppressed by the second light diffusion structural member (3) to be within a range of suitable diffusion angles, and a flat light flux (B) having high directivity is formed.

## Description

### Technical Field

The present invention relates to a light source unit, in particular, a light source unit supplying a flat light flux.
In addition, the present invention also relates to a lighting apparatus using such light source unit.
Further, the present invention also relates to a plant growing equipment using such lighting apparatus.

### Background Art

There have been various thin face radiating transparent panels or thin face radiating box-type radiation apparatuses which receive light at the ends of these panels or boxes and radiate the light out from the faces along its travel through the panels or the boxes. These have been used as backlights which supply light from the back sides to the displays of personal computers, liquid crystal television sets, and advertisement boards. In order to obtain a high uniformity in radiation of light over the entire radiation surface of the backlight, it is required to supply a flat light flux, having the longitudinal axis of its cross section matched with the longitudinal axis of the incident end of the face radiating transparent panel or the face radiating box-type radiation apparatus.
For this reason, a fluorescent tube or a cold cathode fluorescent tube having a straight tube shape is used as the light source.

However, light emitted from the fluorescent tube or the cold cathode fluorescent tube has a large diverging angle. Therefore, there is a problem that the light radiated from the backlight is quickly attenuated as going away from the incident end of the face radiating transparent panel or the face radiating box-type radiation apparatus.
In addition, Japanese Patent Application Laid-open No. 2004-79488, for example, discloses a backlight apparatus using a light emitting diode (LED) as the light source, in which a plurality of LED lamps are arrayed sidelong to have the same light emitting direction with each other so that the light enters the incident end of the transparent panel.

### Disclosure of the Invention

### Problem to be solved by the Invention

However, when the highly directive light flux from LED lamps arrayed sidelong, called LED packages, is supplied to the above face radiating transparent panel or face radiating box-type radiation apparatus at the end, a banded bright and dark pattern along the direction of light flux from each LED lamps on the radiation face of the transparent panel or the box-type radiation apparatus due to the gaps between the LED lamps, causes unevenness of luminance. The banded bright and dark pattern becomes more conspicuous in the neighborhood of the incident end where the light flux enters.
If the directivity of the light flux from each LED lamp is decreased, i.e., if the light flux from the lamp diverges in a larger angle, the banded bright and dark pattern can be weakened. Altough in this case, the radiation from the backlight is quickly attenuated as going away from the incident end of each LED lamp.

Since the energy efficiency of LED has not reached the level required for commercial application, the conventional plant growing equipment with artificial lighting has not yet reached the satisfactory level, in spite of various attempts to make a uniform face radiating lighting apparatus without infrared radiation in use of other light sources.
As an example thereof, Japanese Patent Application Laid-open No. 07-107868, concerning an invention made by the inventor of the present invention, discloses a method of irradiating cultivating plants, in which the light flux from a metal halide lamp or a sodium lamp is condensed and sent to a plant growing chamber after separating and removing infrared rays from the light flux, and hence the light radiated out from a face radiating light radiation structural member.
In this method, the light flux from the light emitting member is once condensed. After separating and removing infrared rays from the light flux by a cold mirror, the light flux is sent to the face radiating light radiation structural member placed in a temperature and humidity conditioning chamber, whereby the light radiated from the entire surface of the radiation face irradiates the cultivating plants.
However, no less than approximately 20% of visible light is lost in the course of condensing light and in the course of separating and removing infrared rays. In addition, since it is difficult to obtain flat light flux, the uniformity of the radiation is not perfect.

This indicates that, in order to make backlight or a light panel with high uniformity and output ratio of light, it is necessary to have a light source unit which forms a flat light flux with high directivity and high uniformity in the density of the flux. Plant growing equipment using an artificial light sources is required to have infrared-free lighting with uniformity in the same manner and high output ratio.
It is an object of the present invention to provide a light source unit that can form a flat light flux having high directivity and high uniformity in the density of the flux. In addition, it is another object of the present invention to provide a lighting apparatus using such light source unit.
Further, it is still another object of the present invention to provide a plant growing equipment using such lighting apparatus.

### Means for solving the Problems

A light source unit according to the present invention comprises a flat light flux supplying means having a light emitting member, for supplying a light flux that is flat along a predetermined plane in a predetermined diverging angle; and a light flux control means for suppressing divergence of the light flux supplied from the flat light flux supplying means along the predetermined plane to form a flat light flux having high directivity.

The first lighting apparatus according to the present invention comprises the aforementioned light source unit and a box-type or panel-type face light radiating structural member having a pair of principal faces opposed to each other and end faces so that the light flux entering the end face from the light source unit is radiated out from at least one of the principal faces.

The second lighting apparatus according to the present invention comprises the aforementioned light source unit, in which the light flux control means is constituted of a panel-type light guide member that is positioned in front of the flat light flux supplying means and has a pair of principal faces extending along the predetermined plane, many ridges or grooves with V-shaped cross sections are arrayed in parallel to each other on one principal surface of the light guide member, being extended in the direction perpendicular to the width direction of the light guide member so that the array is developed in the width direction, in the width direction and the pair of principal faces of the light guide member have reflection characteristics for the light flux from the flat light flux supplying means entering between the pair of principal faces, and further comprises a panel-type face radiating light radiation structural member having a pair of principal faces opposed to each other and end faces so that the light flux entering the end face from the light source unit is radiated out from at least one of the principal faces. The light guide member of the light source unit is also a part of the face radiating light radiation structural member.
The first and the second lighting apparatuses according to the present invention can be used as a backlight of a liquid crystal display apparatus or a display panel.
A plant growing equipment according to the present invention comprises the aforementioned lighting apparatuses and a thermal insulation chamber which is covered with thermal insulation walls, and having a lighting window formed on a part of the thermal insulation walls and a plant growing shelves in the chamber, wherein at least the light emitting member of the light source units used in the lighting apparatuses are placed outside the thermal insulation chamber so as to supply light flux to the thermal insulation chamber through the lighting window, and the face radiating light radiation structural members of the lighting apparatuses are placed inside the thermal insulation chamber so as to radiate the light flux from the light source units toward the plant growing shelves.

### Effects of the Invention

According to the present invention, flat light flux with high directivity and high uniformity in the density of the flux can be obtained by suppressing, with the flux control means, the divergence of the flux which is supplied from the flat light flux supplying means, and flat along a predetermined plane with a predetermined diverging angle. This means that it is possible to make a thin lighting apparatus having high uniformity and high output ratio.
In addition, by using such lighting apparatus, it is possible to realize a plant growing equipment which irradiates cultivating plants with a light flux having high uniformity in the density of light flux while suppressing influence of heat generated by the light source unit.

### Brief Description of the Drawings

FIG. 1 is a cross sectional view illustrating a structure of a light source unit according to the first embodiment of the present invention.
FIG. 2 is a partial enlarged cross sectional view illustrating a light diffusion structural member used in the first embodiment.
FIG. 3 is a cross sectional view illustrating the function of the light diffusion structural member used in the first embodiment.
FIG. 4 is a perspective view illustrating the function of the first embodiment.
FIGS. 5 are cross sectional views illustrating various types of forms of the light diffusion structural member.
FIG. 6 is an enlarged cross sectional view illustrating a linear protrusion of the light diffusion structural member.
FIG. 7 is a cross sectional view illustrating a structure of a light source unit according to the second embodiment.
FIG. 8 is a cross sectional view illustrating a structure of a light source unit according to the third embodiment.
FIG. 9 is a cross sectional view illustrating a structure of a light source unit according to a variation example of the third embodiment.
FIG. 10 is a cross sectional view illustrating a structure of a light source unit according to the fourth embodiment.
FIG. 11 is a cross sectional view illustrating a structure of a light source unit according to a variation example of the fourth embodiment.
FIG. 12 is a perspective view illustrating a structure of a light source unit according to the fifth embodiment.
FIG. 13 is a cross sectional view illustrating an action of the light source unit of the fifth embodiment.
FIG. 14 is a cross sectional view illustrating a structure of a light source unit according to the sixth embodiment.
FIG. 15 is a perspective view illustrating a light guide member used in the sixth embodiment.
FIG. 16 is a diagram illustrating a principle of the light guide member.
FIG. 17 is a diagram illustrating a principle of the light guide member.
FIG. 18 is a diagram illustrating a principle of the light guide member.
FIG. 19 is a partial enlarged cross sectional view illustrating a light guide member in a variation example of the sixth embodiment.
FIG. 20 is a partial enlarged cross sectional view illustrating a light guide member in another variation example of the sixth embodiment.
FIG. 21 is a partial enlarged cross sectional view illustrating a light guide member in still another variation example of the sixth embodiment.
FIG. 22 is a cross sectional view illustrating a structure of a light source unit according to a variation example of the sixth embodiment.
FIG. 23 is a partial enlarged cross sectional view illustrating a tubular structural member in the seventh embodiment.
FIGS. 24 are partial enlarged cross sectional views illustrating a stacked light guide member in the eighth embodiment.
FIG. 25 is a partial enlarged cross sectional view illustrating a stacked light guide member in a variation example of the eighth embodiment.
FIGS. 26 are partial enlarged cross sectional views illustrating a stacked tubular structural member in the eighth embodiment.
FIG. 27 is a perspective view illustrating a structure of a lighting apparatus in the ninth embodiment.
FIG. 28 is a cross sectional view illustrating the structure of the lighting apparatus in the ninth embodiment.
FIG. 29 is a cross sectional view illustrating a structure of a lighting apparatus according to a variation example of the ninth embodiment.
FIG. 30 is a cross sectional view illustrating a structure of a lighting apparatus according to another variation example of the ninth embodiment.
FIG. 31 is a cross sectional view illustrating a structure of a lighting apparatus according to the tenth embodiment.
FIG. 32 is a cross sectional view illustrating a structure of a lighting apparatus according to a variation example of the tenth embodiment.
FIG. 33 is a cross sectional view illustrating a structure of a lighting apparatus according to another variation example of the tenth embodiment.
FIG. 34 is a cross sectional view illustrating a structure of a lighting apparatus of the eleventh embodiment.
FIG. 35 is a cross sectional view illustrating a structure of a lighting apparatus according to a variation example of the eleventh embodiment.
FIG. 36 is a cross sectional view illustrating a structure of a lighting apparatus of the twelfth embodiment.
FIG. 37 is a cross sectional view illustrating a structure of a lighting apparatus of the thirteenth embodiment.
FIG. 38 is a perspective view illustrating a transparent panelused in the thirteenth embodiment.
FIG. 39 is a cross sectional view illustrating a structure of a lighting apparatus of the fourteenth embodiment.
FIG. 40 is a cross sectional view illustrating a structure of a lighting apparatus according to variation example of the fourteenth embodiment.
FIG. 41 is a perspective view illustrating a transparent panel used in a lighting apparatus according to another variation example of the fourteenth embodiment.
FIG. 42 is a cross sectional view illustrating a structure of a lighting apparatus of the fifteenth embodiment.
FIG. 43 is a cross sectional view illustrating a structure of a lighting apparatus of the sixteenth embodiment.
FIG. 44 is a cross sectional view illustrating a structure of a plant growing equipment according to the eighteenth embodiment.
FIG. 45 is an enlarged cross sectional view illustrating a main part of FIG. 44.
FIG. 46 is a cross sectional view illustrating a structure of a plant growing equipment according to a variation example of the eighteenth embodiment.
FIG. 47 is a cross sectional view illustrating a structure of a plant growing equipment according to a nineteenth embodiment.
FIG. 48 is an enlarged cross sectional view illustrating a main part of FIG. 47.
FIG. 49 is an enlarged cross sectional view illustrating a main part in a variation example of the eighteenth and nineteenth embodiments.
FIG. 50 is an enlarged cross sectional view illustrating a main part in another variation example of the eighteenth and nineteenth embodiments.
FIG. 51 is an enlarged cross sectional view illustrating in still another variation example of the eighteenth and nineteenth embodiments.
FIGS. 52 are diagrams illustrating a structure of a light flux control means and a lighting apparatus according to the seventeenth embodiment.

### Best Mode for carrying out the Invention

Hereinafter, embodiments of the present invention are described with reference to the attached drawings.

### First Embodiment

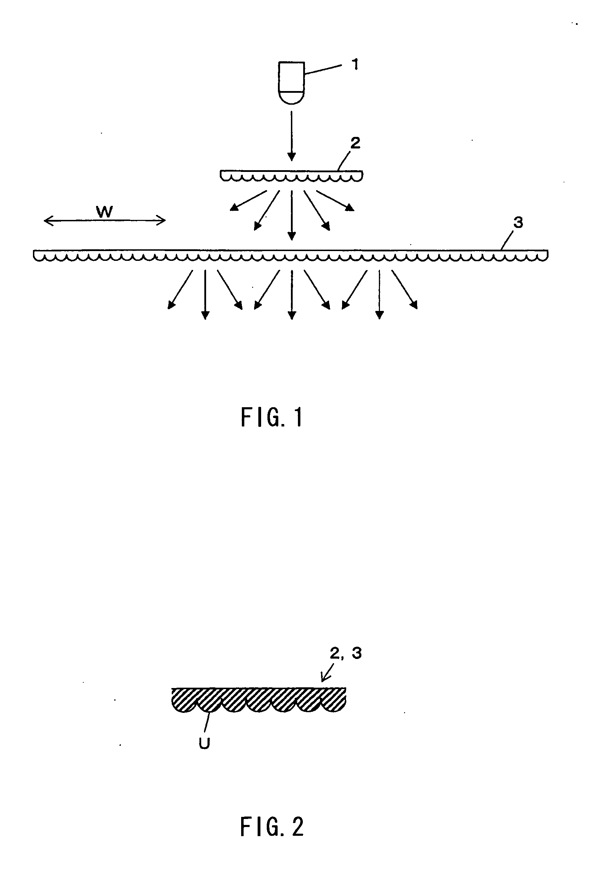

A structure of a light source unit according to the first embodiment is illustrated in FIG. 1. The first light diffusion structural member 2 is placed in front of an LED lamp 1, and the second light diffusion structural member 3 is placed in front of the first light diffusion structural member 2 with a predetermined distance from the first light diffusion structural member 2. The LED lamp 1 and the first light diffusion structural member 2 constitute a flat light flux supplying means of the present invention, and the second light diffusion structural member 3 constitutes a light flux control means of the present invention.
As the LED lamp 1, so-called LED package having high directivity can be used, in which an LED chip (element) is combined with a reflection member and a lens so as to be fixed with each other. Alternatively, it is possible to use the LED chip as it is.

The first light diffusion structural member 2 and the second light diffusion structural member 3 are panel-type or film-type transparent structural members , and have many linear ridges U that are arrayed in parallel to each other and in substiantially close manner to each other on at least one principal face thereof so that the array is developed in the width direction of the light source unit as illustrated in FIG. 2. Each of the individual linear ridges U has a part of a circular shape in its cross section perpendicular to the longitudinal direction, and the surface of the linear ridges U are practically specular.

Here, the "practically specular surface" can be defined as below.
It is known that the light incident to a predetermined surface of a structural member having unevenness sufficiently smaller than a wavelength of the light makes specular surface reflection. On the contrary, when the unevenness is the same order of or larger than the wavelength of the light, the incident light makes irregular reflection (diffuse reflection). The surface that causes the specular surface reflection is usually called a "specular surface".
If the major portion of the target surface of the subject is constituted of a "specular surface" or a substantially uniformly distributed "specular surface", and if it is considered that a ratio of a total sum of the specular surface areas with respect to the area of the predetermined surface (referred to as specular surface ratio) is a value within a reasonable range for a use of the surface, the surface is defined as the "practically specular surface". For instance, a mirror needs to cause the specular surface reflection of most of incident light because of its required function, and hence its specular surface ratio might be approximately 0.9 or larger.

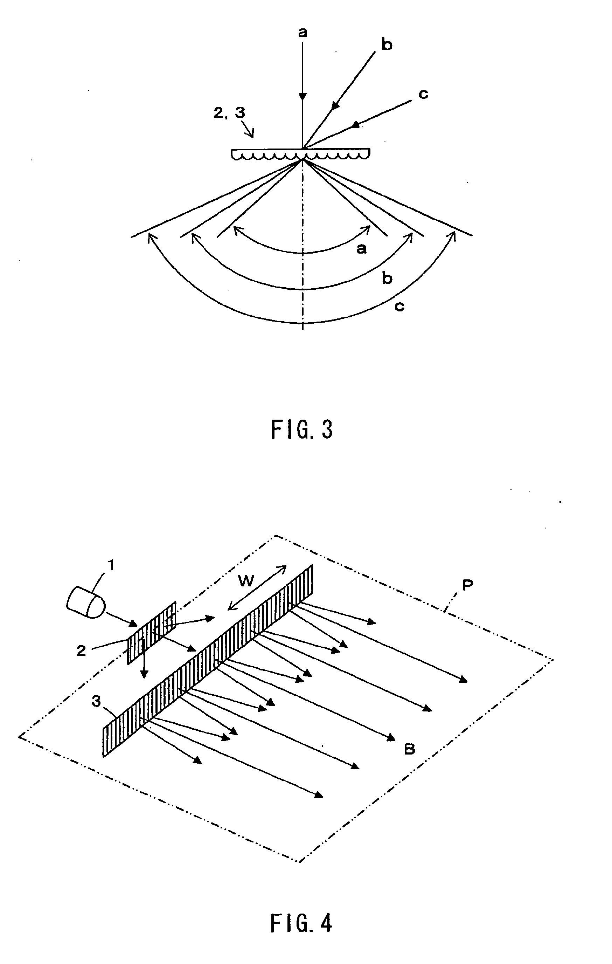

Such structure is similar to the structure of the light diffusion structural member described in Japanese Patent Application Laid-open No. 2002-81275 of the invention by the inventor of the present invention. The first light diffusion structural member 2 and the second light diffusion structural member 3 have the following property. As illustrated in FIG. 3, the diffusion distribution is substantially symmetric with respect to the normal to the light diffusion structural members 2 and 3 in a plane perpendicular to the longitudinal direction of the linear ridges of the light diffusion structural members 2 and 3, not only in the case (a) where the light enters the faces of the light diffusion structural members 2 and 3 in the direction perpendicular to the faces but also in the cases (b) and (c) where the light enters in a slanting direction. Therefore, the first light diffusion structural member 2 and the second light diffusion structural member 3 have the property that the diffusion distribution is always symmetric with respect to an axis in a constant direction regardless of the incident angle. As illustrated in FIG. 4, the first light diffusion structural member 2 and the second light diffusion structural member 3 are formed in a strip-like shape elongated in the direction perpendicular to the longitudinal direction of the linear ridges U, and are placed so that the faces thereof are substantially perpendicular to the center axis of the LED lamp 1 in the light emitting direction and that the linear ridges U are parallel to each other.

Light emitted from the LED lamp 1 enters the face of the first light diffusion structural member 2 substantially perpendicularly thereto, and is diffused in a predetermined plane P perpendicular to the longitudinal direction of the linear ridges U of the light diffusion structural member 2, and becomes a flat light flux having a predetermined diverging angle, and enters the face of the second light diffusion structural member 3. Therefore, the incident angle to the second light diffusion structural member 3 varies depending on the angle of the light that has transmitted the first light diffusion structural member 2, though, as illustrated in FIG. 3, even if the light enters in a slanting direction, the diffusion distribution is substantially symmetric with respect to the normal to the light diffusion structural member 3 in the plane perpendicular to the longitudinal direction of the linear ridges. Therefore, the light diffusion in the width direction W of the second light diffusion structural member 3 is suppressed and controlled to be within an appropriate range of the diverging angle. As a result, a light flux B that is flat along the plane P, and has high directivity is formed.
Note that a laser beam oscillator may be used instead of the LED lamp 1 so that the same effect can be obtained.

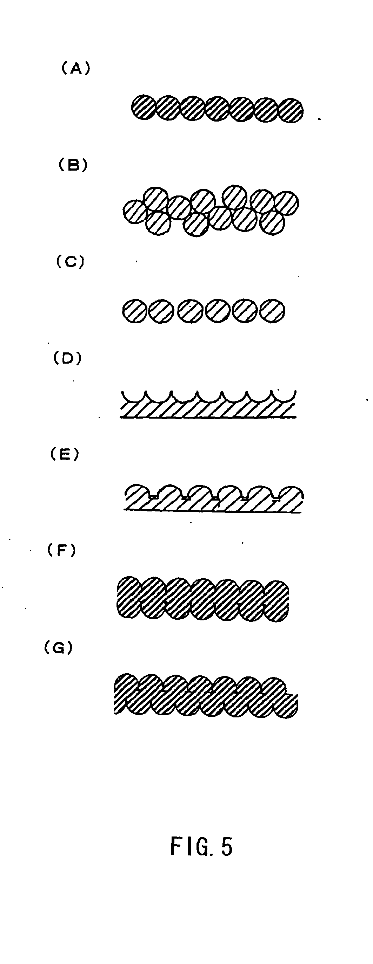

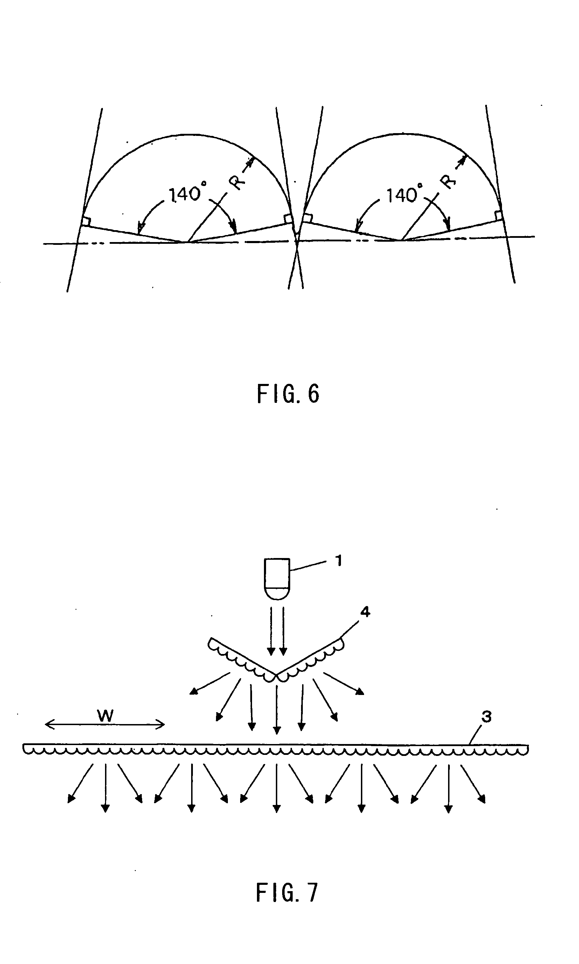

Note that the linear ridge U may have various cross sections as illustrated in FIGS. 5(A) to 5(G), for example, in addition to the cross section illustrated in FIG. 2. In this case, it is necessary to have the cross section formed in a portion of a substantially circular shape partially and that the surface of the linear ridge U be a practically specular surface. In addition, it is preferable that a distance between the centers of neighboring linear ridges U be 1 µm to 1 mm.
If arcs of neighboring linear ridges U are connected to form the light diffusion structural members 2 and 3 as illustrated in FIGS. 2, 5(D), 5(F), and (G), there is a technical restriction for a practical commercial production. As illustrated in FIG. 6, each of the linear ridges U is formed so that the outer edge of the cross section perpendicular to the longitudinal direction thereof is an arc having a circumference angle of 140 degrees or larger, a straight line part is formed from the end point of the arc in the tangential direction until reaching a depth substantially equal to a radius of the linear ridges U from a vertex of the linear ridge U, and the line is connected to the neighboring linear ridge U at this point. Thus, the light diffusion structural members 2 and 3 can be commercially produced by extrusion process.

### Second Embodiment

As to the first embodiment illustrated in FIG. 1, it is possible to use the first light diffusion structural member 4 that is bent or curved to be convex with respect to the second light diffusion structural member 3 as illustrated in FIG. 7, instead of the first light diffusion structural member 2 that is parallel to the second light diffusion structural member 3. The first light diffusion structural member 4 has a structure similar to that of the first light diffusion structural member 2 of the first embodiment except that the face is bent or curved.
When the bent or curved first light diffusion structural member 4 is used in this way, the diffusion direction is expanded by the first light diffusion structural member 4. Thus, it is possible to obtain a flat light flux that is wide in the width direction W of the second light diffusion structural member 3.

### Third Embodiment

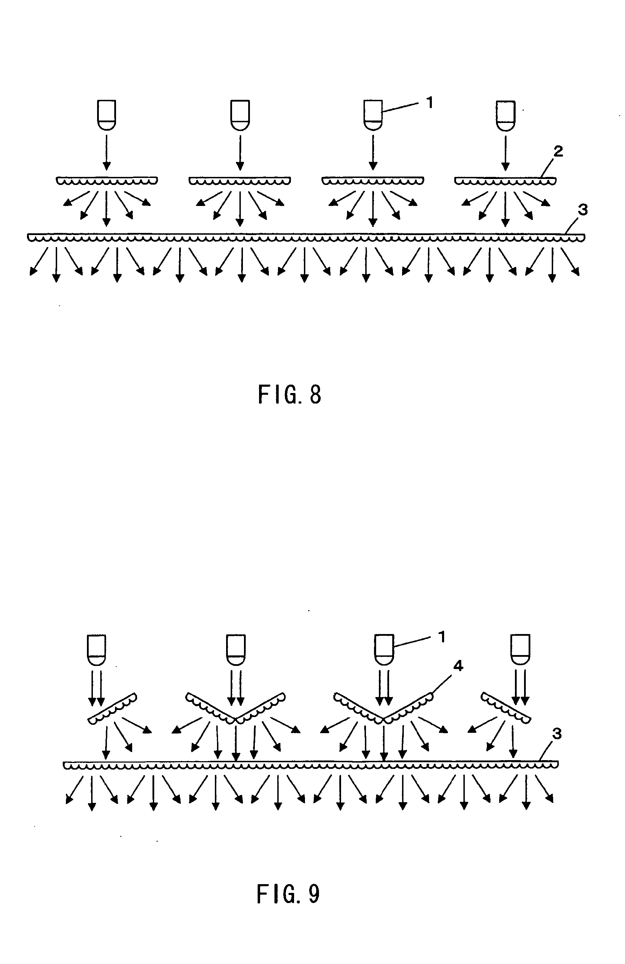

The structure of the light source unit according to the third embodiment is illustrated in FIG. 8. The third embodiment has a structure modified from that of the first embodiment illustrated in FIG. 1, in which a plurality of LED lamps 1 are arrayed on the plane P in the longitudinal direction of the second light diffusion structural member 3 so as to face the same direction, i.e., so as to face the face of the second light diffusion structural member 3, and the first light diffusion structural members 2 are placed in front of the individual LED lamps 1 and between the LED lamps 1 and the second light diffusion structural member 3.
Thus, it is possible to obtain flat light flux having a high density and a larger width in the longitudinal direction of the second light diffusion structural member 3, by arraying plurarity of LED lamps 1.
Note that it is possible that instead of the plurality of LED lamps 1, a plurality of LED chips are arrayed sidelong in the same direction, which are combined with a reflection member having a shape for obtaining flat light flux and a lens if necessary to be fixed as an LED lamp. These LED lamps or a plurality of laser beam oscillators may be used for obtaining the same effect.
In addition, as illustrated in FIG. 9, instead of the first light diffusion structural member 2, the first light diffusion structural member 4 illustrated in FIG. 7 may be placed between each LED lamp 1, the aforementioned LED lamp constituted of the plurality of LED chips, or the laser beam oscillator and the second light diffusion structural member 3.

### Fourth Embodiment

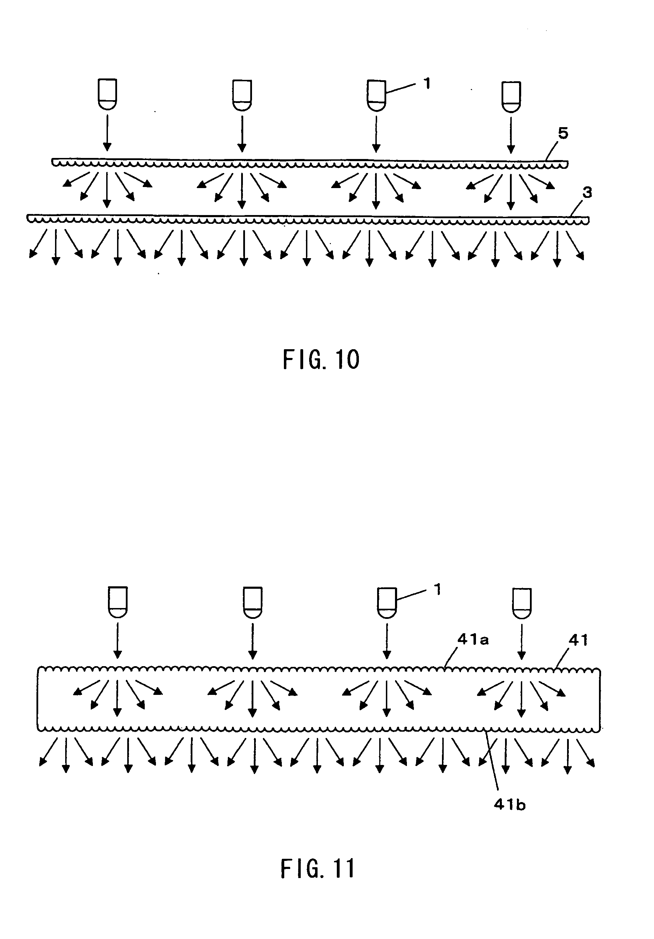

The plurality of first light diffusion structural members 2 corresponding to the plurality of LED lamps 1 are separated from each other in the third embodiment illustrated in FIG. 8. However, it is possible to place an integrated first light diffusion structural member 5 commonly for the plurality of LED lamps 1 as illustrated in FIG. 10.
In addition, as illustrated in FIG. 11, it is possible to use a transparent member 41 formed by integrating the first light diffusion structural member 5 and the second light diffusion structural member 3. An end face 41a of the transparent member 41 facing the LED lamps 1 functions as the first light diffusion structural member 5, and the other end face 41b functions as the second light diffusion structural member 3.
In addition, instead of the plurality of LED lamps 1, a plurality of laser beam oscillators may be used.

### Fifth Embodiment

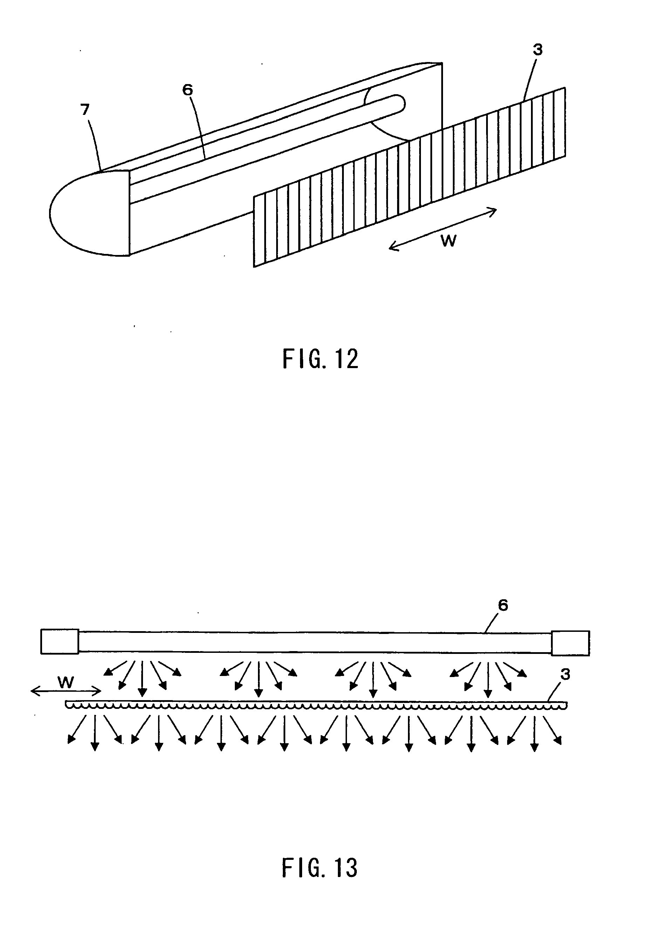

A structure of a light source unit according to the fifth embodiment is illustrated in FIG. 12. As to the fifth embodiment, instead of the LED lamp 1 and the first light diffusion structural member 2 in the first embodiment illustrated in FIG. 1, the flat light flux supplying means is constituted of a light emitting member 6 made up of a fluorescent tube or a cold cathode fluorescent tube having a straight tube shape and a reflection member 7 placed behind the light emitting member 6 and reflects the light emitted from the light emitting member 6 so as to redirect the flux forward. A second light diffusion structural member 3 is placed in front of the light emitting member 6.

The light emitting member 6 such as the fluorescent tube or the cold cathode fluorescent tube emits light in the entire circumferential direction in its cross section. However, since the reflection member 7 is placed behind the light emitting member 6, light directed toward the rear of the light emitting member 6 is reflected by the reflection member 7 so as to form the flat light flux redirected towards the front. As illustrated in FIG. 13, however, light emitted from the light emitting member 6 such as the fluorescent tube or the cold cathode fluorescent tube has a large diverging angle in the lateral direction.
Therefore, the flat light flux having a large diverging angle is led to enter the second light diffusion structural member 3 so that the light diffusion in the width direction W of the second light diffusion structural member 3 is suppressed similarly to the first embodiment. Thus, the flat light flux having high directivity is formed.
Note that the reflection member 7 having a parabola-shaped cross section, for example, may be used so that the light emitting member 6 is positioned at the focal point of the parabola shape.
Alternatively, a plurality of LED chips having a large light flux angle can be arrayed sidelong with the same direction so as to constitute the light emitting member, which may be combined with a reflection member having a shape to obtain flat light flux so as to constitute the flat light flux emitting means.

### Sixth Embodiment

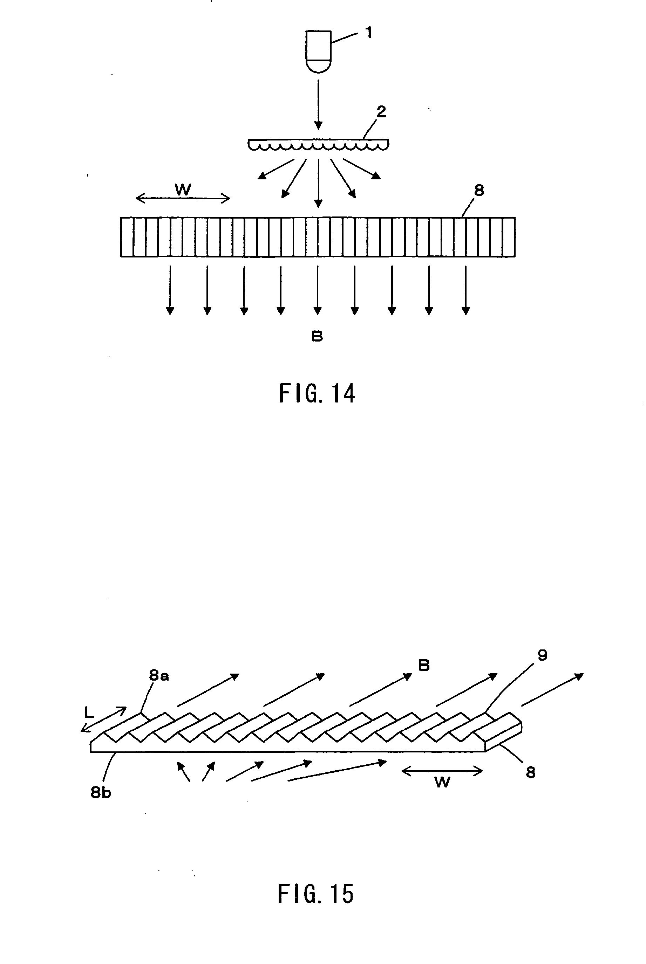

A structure of a light source unit according to the sixth embodiment is illustrated in FIG. 14. As to the sixth embodiment, instead of the second light diffusion structural member 3 in the first embodiment illustrated in FIG. 1, a light guide member 8 as the light flux control means is located in front of the flat light flux supplying means including the LED lamp 1 and the first light diffusion structural member 2. The light guide member 8 is constituted of a panel-type structural member being transparent. As illustrated in FIG. 15, the light guide member 8 has a panel-type shape having a pair of principal faces 8a and 8b. One principal face 8a has a rugged surface 9 which has many V shapes in its cross section, wherein V shapes are extended in the direction L perpendicular to the width direction W of the light guide member 8 and are arrayed in parallel to each other on the face 8a so that the array is developed in the width direction W of the light guide member 8.
The flat light flux formed with the first light diffusion structural member 2 enters the light guide member 8 from an end face 8c of the light guide member 8 and is reflected repeatedly by the pair of principal faces 8a and 8b, whereby the light diffusion in the width direction W of the light guide member 8 is suppressed so as to form the flat light flux B having high directivity.

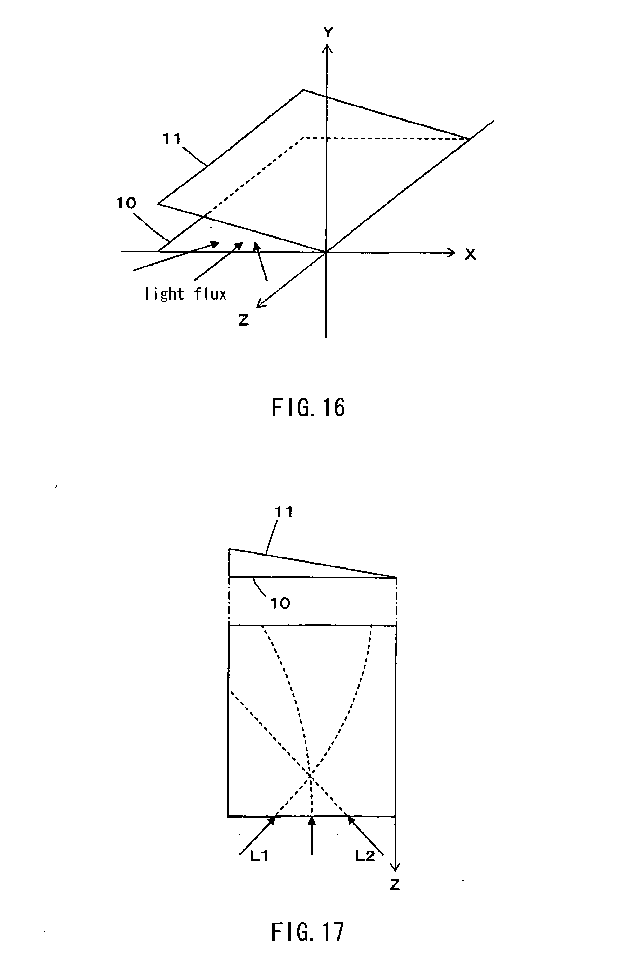

Here, a mechanism of reflection in the light guide member 8 is described. As illustrated in FIG. 16, a first rectangular specular surface reflection plate 10 is placed on the XZ plane, and a second rectangular specular surface reflection plate 11 that is inclined with respect to the reflection plate 10 by a predetermined angle is placed so that a side thereof meets with the first reflection plate 10 on the Z axis and that reflection surfaces of the reflection plates 10 and 11 are opposed to each other. In this state, a light flux of a laser pointer, for example, enters between the reflection plates 10 and 11 from the (X, Y, +Z) space to the (X, Y, -Z) space. If the light flux has a slight angle with respect to the XZ plane, the light flux goes forward while being reflected repeatedly by reflection surfaces of both the reflection plates 10 and 11. In this case, since the reflection surfaces of the reflection plates 10 and 11 have a predetermined angle therebetween, if the incident angle of the light flux in the XZ plane is changed, the light flux draws a locus as illustrated in FIG. 17 and is curved in the direction of going away from the YZ plane, i.e., in the -X direction as the light flux goes forward in the -Z direction.

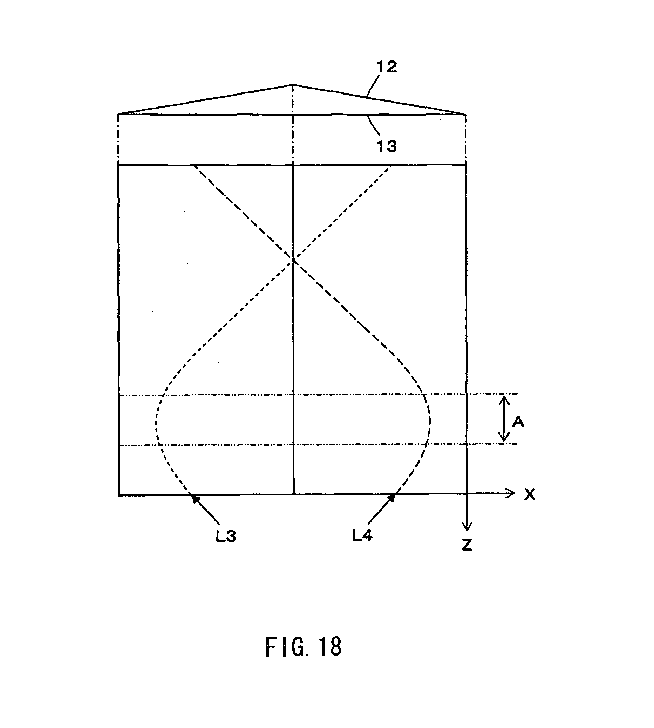

If the angle of the incident light flux directed to the YZ plane is larger like the light flux L1 illustrated in FIG. 17, the radius of curvature becomes smaller when the light flux L1 is reflected repeatedly between the reflection surfaces, and hence the light flux is curved rapidly. On the contrary, the light flux L2 that enters so as to go away from the YZ plane is curved slowly.
Therefore, as illustrated in FIG. 18, a specular surface reflection plate 12 having a V-shaped cross section and a planar specular surface reflection plate 13 are placed so that their reflection surfaces are opposed to each other, and the light fluxes L3 and L4 are led to enter between the reflection plates 12 and 13. Then, since the light flux directed toward the contact side between the reflection plates 12 and 13 is curved so as to go away from the contact side, the light fluxes L3 and L4 go forward in the -Z direction while meandering by the repeated reflections between the reflection surfaces of the reflection plates 12 and 13.
Further, when the reflection plates 12 and 13 are cut in parallel with the X axis in a region A in which the propagating directions of the light fluxes L3 and L4 are substantially the -Z direction, the light flux that enters with a diverging angle like the light fluxed L3 and L4 can be projected substantially in the -Z direction.

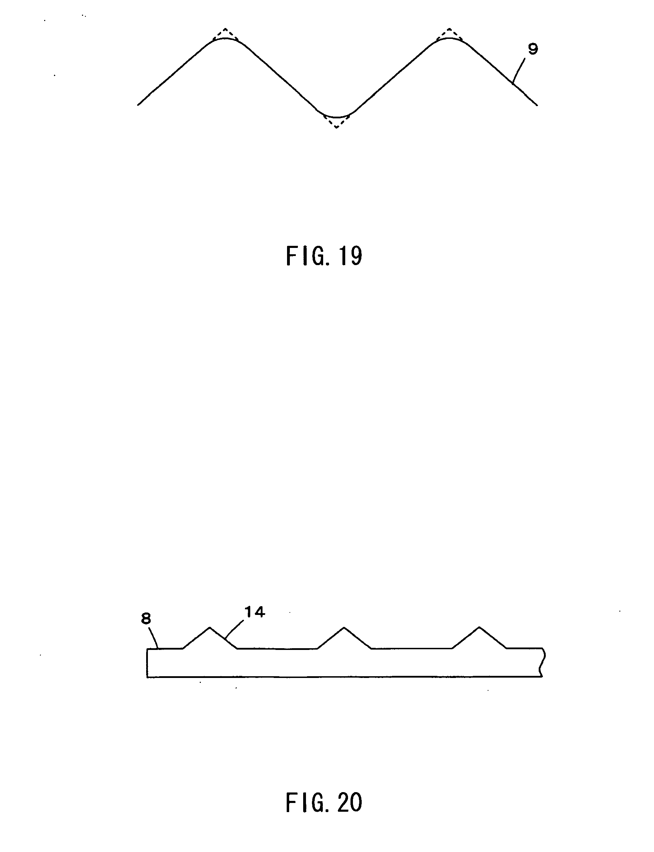

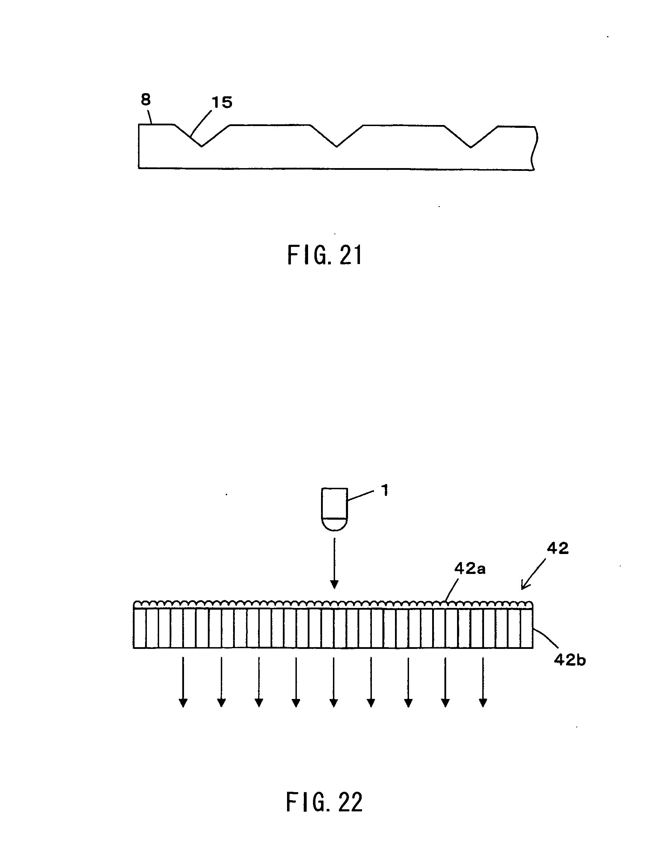

The rugged surface 9 on the one principal face 8a of the light guide member 8 corresponds to the reflection plate 12 of FIG. 17 (to be corrected as FIG. 18), and the other principal face 8b corresponds to the reflection plate 13 in FIG. 17 (to be corrected as FIG. 18). In other words, the light flux entering the end face 8c of the light guide member 8 goes forward making reflection repeatedly between the rugged surface 9 of one principal face 8a and the other principal face 8b, and hence the light diffusion in the width direction W of the light guide member 8 is suppressed. A size of the light guide member 8 in the direction L perpendicular to the width direction W is selected so that substantially parallel light can be projected corresponding to the diverging angle of the light flux entering the end face 8c of the light guide member 8.
Further, as illustrated in FIG. 19, the jagged surface 9 of the light guide member 8 may have round peaks and bottoms. This means that the rugged surface may be constitutedof pairs of specular surfaces which are getting away from or close to each other. Here, the "specular surface" means a flat surface. Hereinafter, the "pair of specular surfaces" with "getting away from or close to each other" means a "pair of specular surfaces that are flat surfaces".
In addition, the light guide member 8 illustrated in FIG. 15 has many surfaces of ruggedness 9 arrayed closely and densely. While as illustrated in FIG. 20, the light guide member 8 comprises many pairs of specular surfaces which have V shapes in the cross section, or are getting away from or close to each other (hereinafter, the description that "a pair of specular surfaces constitute" means that "a pair of specular surfaces is included"). The linear ridges 14 may be arrayed with a predetermined space therebetween, and hence the rugged surfaces may be formed by the surface of the linear ridges 14. In addition, as illustrated in FIG. 21, it is possible to array grooves 15 constituted of many pairs of specular surfaces getting away from each other with a predetermined space therebetween, and thus the rugged surface may be formed with the surfaces of the grooves 15. In any case, the reflection surface becomes the practically specular surface.

In addition, in order to suppress the radiation by exceeding the critical angle of total internal reflection along the travel of light through the light guide member 8, it is possible to form a metal reflection coating on the principal face, the side or end face or to have other treatment of enhancing the reflecting property thereof. In addition, it is also possible to attach a reflection member such as a specular surface reflection plate onto the same.
In addition, as illustrated in FIG. 22, it is possible to use an transparent member 42 comprising the light guide member 8 and the first light diffusion structural member 2 that are formed integrally. The transparent member 42 has, similarly to the light guide member 8, rugged surfaces which consist of many pairs of specular surfaces with V-shaped cross section or many pairs of specular surfaces getting away from or close to each other, which are arrayed in parallel to each other, developing the array in the width direction so that the pairs of specular surfaces are extended in the direction perpendicular to the width direction. An end face 42a of the transparent member 42 facing the LED lamp 1 works as the first light diffusion structural member 2. Further, as described in the second embodiment, it is possible to use the first light diffusion structural member 2 that is convex or curved with respect to the light guide member 8.

### Seventh Embodiment

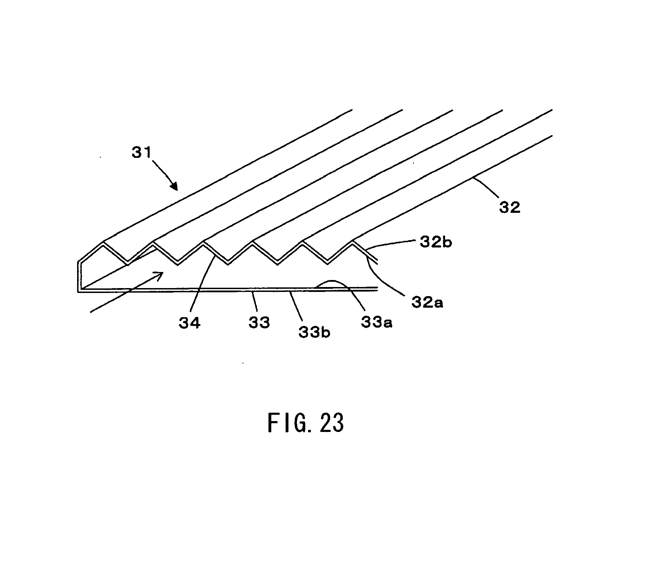

Instead of the light guide member 8 of the sixth embodiment, it is possible to use a tubular structural member 31 as illustrated in FIG. 23. The tubular structural member 31 has a pair of thin plate portion 32 and 33 facing each other, and the inner surfaces 32a and 33a of the thin plate portion 32 and 33 facing each other have practically specular surfaces, respectively. The surfaces 32a and 33a have characteristic of reflecting light flux entering in the space therebetween. In addition, the inner surface 32a of the thin plate portion 32 is provided with many ridges or grooves 34 with V-shaped cross section, that are arrayed in parallel to each other, developing the array in the width direction of the tubular structural member 31, so that the grooves or ridges are extended in the direction perpendicular to the width direction of the tubular structural member 31. In addition, the inner peaks of the convex ridges and grooves may contact with the surface 33a of FIG. 23.
Further, if at least one of the thin plate portion 32 and 33 is transparent, the outer surfaces 32b and 33b may have the reflecting property instead of the above-mentioned inner surfaces 32a and 33a. Also in this case, the surfaces 34 of the ridges and grooves are formed on the surface having the reflecting property.
The effect similar to that of the sixth embodiment can be obtained also by using the tubular structural member 31. This is an effect of that the ridges or grooves are a pair of specular surfaces getting away from or close to each other.

### Eighth Embodiment

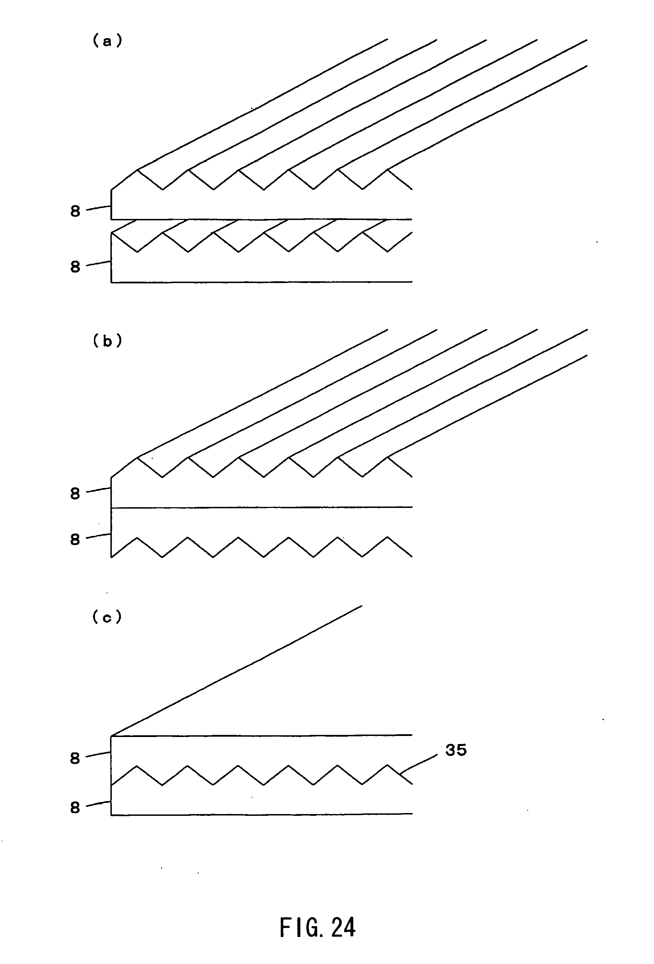

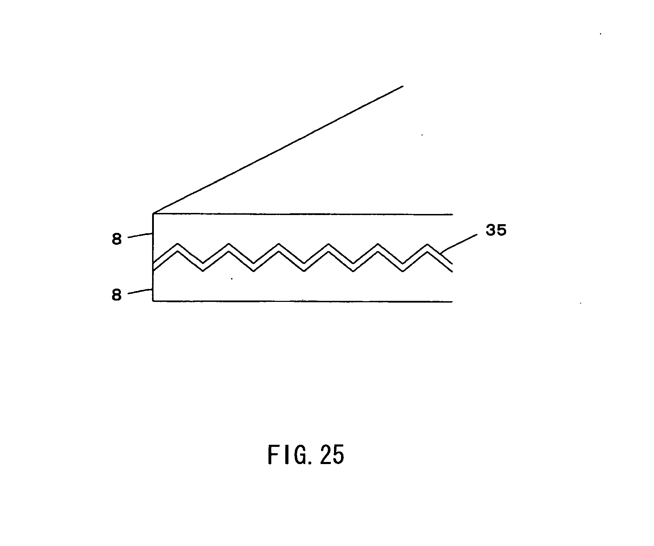

As illustrated in FIGS. 24(a), 24(b), and 24(c), it is possible to stack and use the plurality of light guide members 8 of the sixth embodiment for use. In this case, it is not necessary that the jaggedness or ruggedness of the light guide members are identical between the layers.
In any case, more light can be radiated out efficiently by having this structure. As illustrated in FIGS. 24(b) and 24(c), the plurality of light guide members 8 may be glued to each other with adhesive or the like. In particular, as illustrated in FIG. 24(c), when the light guide members 8 are glued together with adhesive or the like by engaging the ridges and grooves of the surfaces 34, the light guide member 8 are reinforced by gluing together even if the V shapes of the cross sections of the rugged surfaces 34 of the light guide member 8 are formed deep. It is preferable that the adhesive have density smaller than that of the material of the light guide member 8 so that superior reflecting property can be obtained on the joining interface.
In addition, as illustrated in FIG. 25, it is possible to dispose a plastic sheet 35 having density smaller than that of the material of the light guide members 8 between the light guide members 8 so as to be glued to each other. In addition, it is possible to use a metal sheet instead of the plastic sheet 35 or to form an air layer between the light guide members 8.
If a metal reflection coating is formed on the rugged surfaces 34 of the light guide members 8, the rugged surfaces 34 may be engaged directly with each other so as to fix the light guide members 8. It is not necessary to use adhesive having density smaller than that of the light guide member 8 for gluing them together.

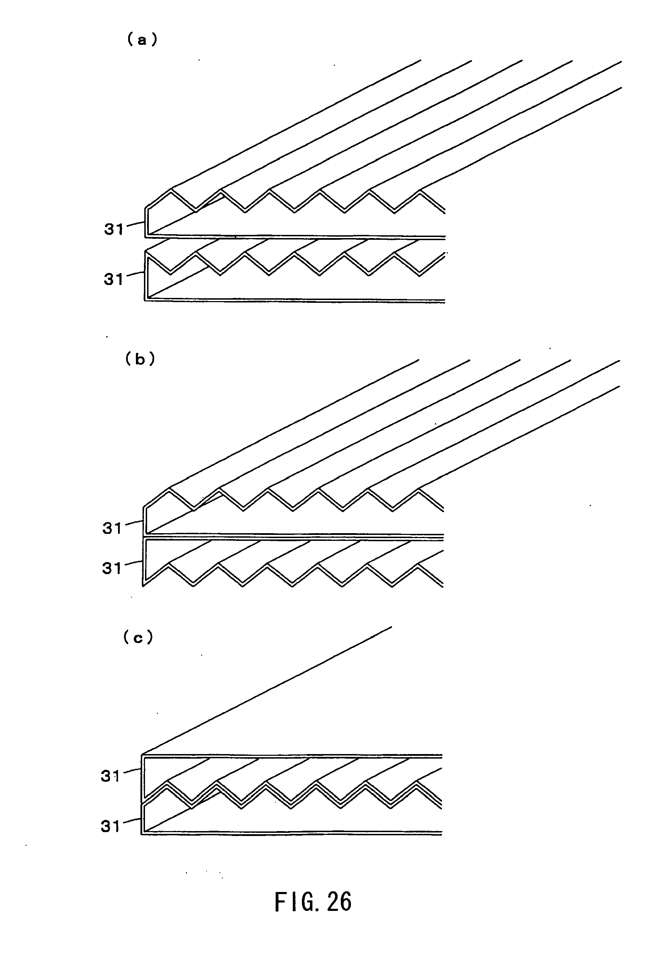

In the same manner, as illustrated in FIGS. 26(a), 26(b), and 26(c), it is possible to stack and use the plurality of tubular structural members 31 of the seventh embodiment. As to this stacking structure, if the peaks of inner convex of the jaggedness or ruggedness of the tubular structural member 31 of the seventh embodiment contact with the opposing surface, the plate having the jaggedness or ruggedness lies between the flat plates in the stacking structure.
In addition, it is possible to use a stacking structure in which at least one light guide member 8 and at least one tubular structural member 31 are stacked with each other.

### Ninth Embodiment

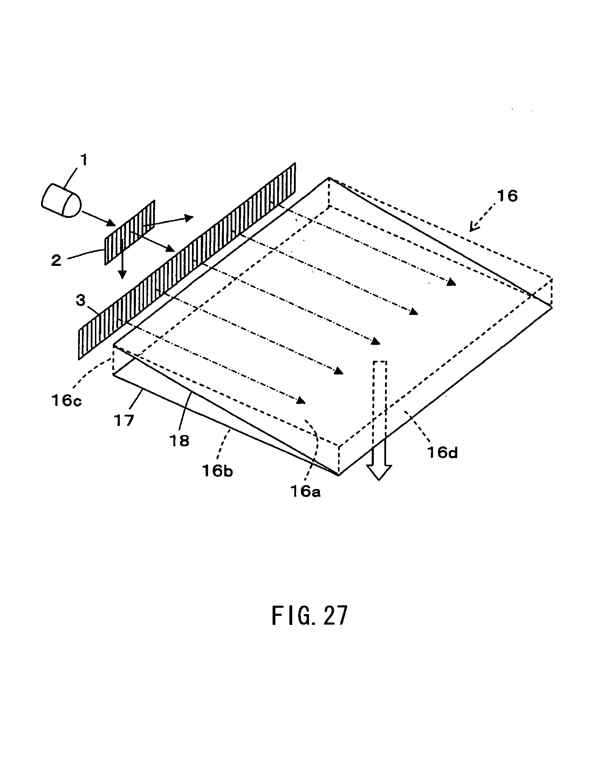

A structure of a lighting apparatus according to the ninth embodiment is illustrated in FIG. 27. A face radiating box-type light radiation structural member 16 is placed in front of the light source unit of the first embodiment. The face radiating light radiation structural member 16 comprises a pair of principal faces 16a and 16b opposed to each other, and an end face 16c facing the light source unit. A transparent light diffusion panel 17 forming a light radiating face is placed on one principal face 16b. In addition, a flat reflection panel 18 is placed to be inclined at a predetermined angle with respect to the transparent light diffusion panel 17 so that the space between the flat reflection panel 18 and the transparent light diffusion panel 17 is decreased as being away from the light source unit.

The transparent light diffusion panel 17 may be similar to the first light diffusion structural member 2 and the second light diffusion structural member 3 of the light source unit, which is a panel-type or a film-type structural member , with many linear ridges U arrayed in parallel and substantially close to each other on one principal face thereof. Each of the linear ridges U forms a part of a substantially circular shape in its cross section perpendicular to the longitudinal direction of the ridge U, wherein the ridges U constitute a practically specular surface. Further, the transparent light diffusion panel 17 is placed in the orientation such that the longitudinal direction of the linear ridge U becomes parallel to the end face 16c of the face radiating light radiation structural member 16. However, it is possible to adopt other structure of the transparent light diffusion panel.

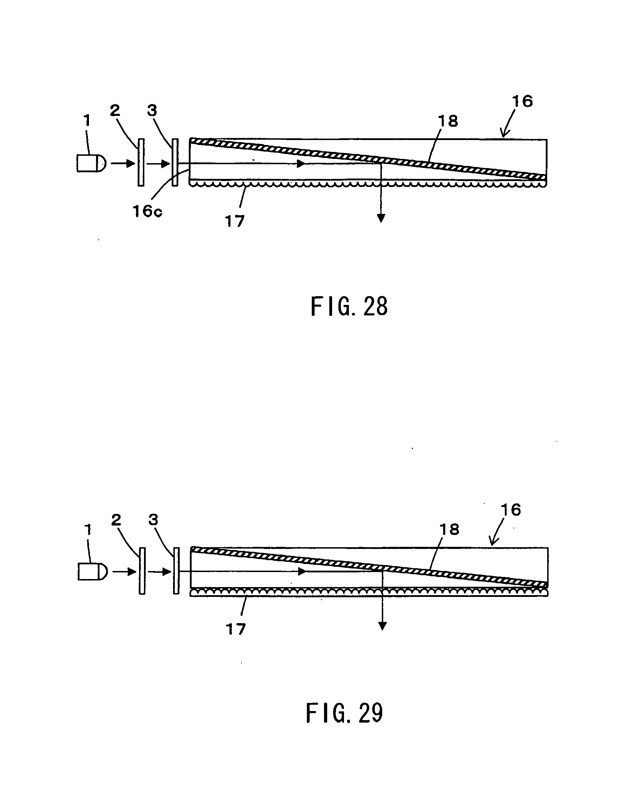

As illustrated in FIG. 28, when the flat light flux having high directivity enters in the face radiating light radiation structural member 16 from the light source unit through the end face 16c, the light flux enters the transparent light diffusion panel 17 directly or after being reflected by the flat reflection plate 18. A part of the light flux passes through the transparent light diffusion panel 17 and is diffused there so as to be projected to an irradiation area, while the other part of the light flux is reflected by the transparent light diffusion panel 17 and is reflected repeatedly between the flat reflection panel 18 and the transparent light diffusion panel 17 so as to go forward between the flat reflection panel 18 and the transparent light diffusion panel 17.

Here, since the flat light flux having high directivity is redirected from the light source unit as described above, the number of reflection on the transparent light diffusion panel 17 with respect to the travel distance of the light flux is small so that the decrease of light energy can be suppressed. Therefore, the light flux goes forward sufficiently deep along the transparent light diffusion panel 17 and the flat reflection panel 18, and hence uniform radiation can be obtained throughout the entire radiation face.

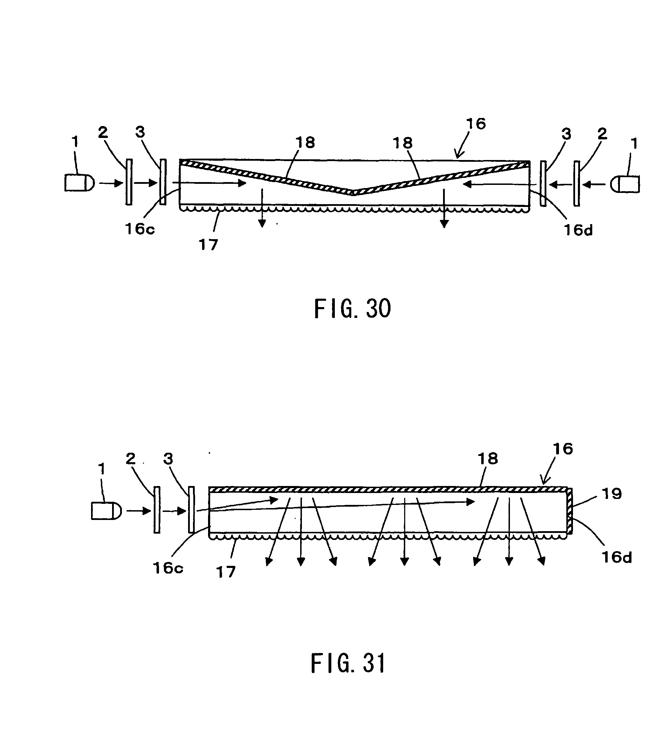

Note that, in the ninth embodiment, the transparent light diffusion panel 17 is placed so that the many linear ridges U face the outside of the face radiating light radiation structural member 16, but it is possible to place the transparent light diffusion panel 17 so that the many linear ridges U face the inside of the face radiating light radiation structural member 16 as illustrated in FIG. 29.
In addition, as illustrated in FIG. 30, it is possible to place two flat reflection panels 18 inclined in the opposite directions to each other so that a space between the middle part of the face radiating light radiation structural member 16 and the transparent light diffusion panel 17 is most decreased, and to place the light source unit independently to each of a pair of opposing end faces 16c and 16d of the face radiating light radiation structural member 16, and hence the flat light flux having high directivity may enter from each of the light source unit.

### Tenth Embodiment

A structure of a lighting apparatus according to a tenth embodiment is illustrated in FIG. 31. The tenth embodiment has a structure in which the flat reflection plate 18 of the face radiating light radiation structural member 16 in the lighting apparatus of the ninth embodiment is placed in parallel to the transparent light diffusion panel 17. The flat light flux entering the face radiating light radiation structural member 16 from the light source unit through the end face 16c has some small beam angle in the thickness direction of the face radiating light radiation structural member 16. Therefore, even if the flat reflection panel 18 is placed in parallel to the transparent light diffusion panel 17, the light flux enters the transparent light diffusion panel 17 directly or after being reflected by the flat reflection panel 18, and hence uniform radiation for lighting can be made throughout the entire light radiating face.

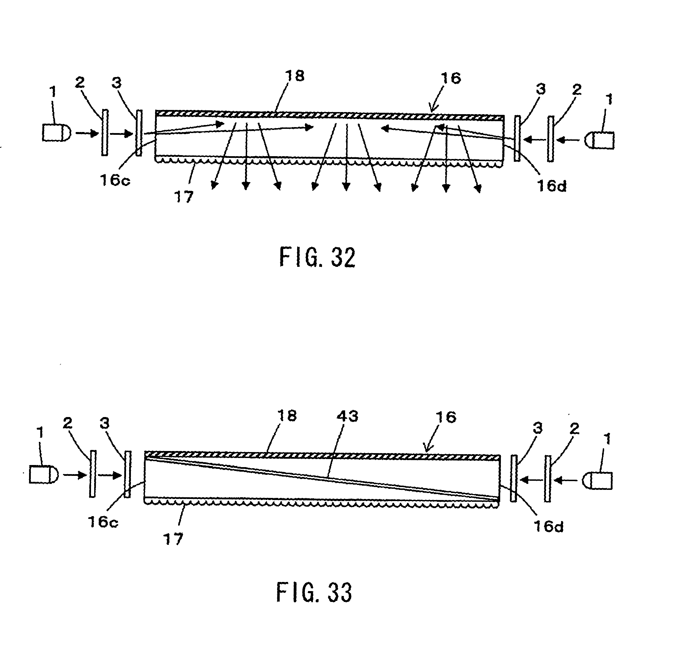

Note that, in this case, it is preferable to place a reflection panel 19 at the deep end face 16d of the face radiating light radiation structural member 16, whereby the light flux reaching the reflection panel 19 without being radiated on the way is reflected by the reflection panel 19 so as to travel again through the face radiating light radiation structural member 16.
In addition, as illustrated in FIG. 32, instead of placing the reflection panel 19 on the deep end face 16d of the face radiating light radiation structural member 16, it is possible to place the light source units independently on the opposing end face 16c and 16d of the face radiating light radiation structural member 16 so that the flat light flux with high directivity enters from each of the light source units.
Further, as illustrated in FIG. 33, it is possible to place a transparent panel or a transparent film 43 between the flat reflection panel 18 and the transparent light diffusion panel 17 so that a space with the transparent light diffusion panel 17 or a space with the flat reflection panel 18 becomes smaller as being away from the end face 16c and 16d. In this way, compared with the state without the transparent panel or the transparent film illustrated in FIG. 32, the reflection is repeated more times between the transparent panel or the transparent film 43 and the flat reflection panel 18 or the transparent light diffusion panel 17, whereby more light can be radiated out. This means that the surface of the transparent panel or the transparent film 43 is not necessarily required to be flat as long as it is a specular surface. In other words, the transparent panel or the transparent film 43 may be a transparent light diffusion panel 17 or a film having the same array of the linear ridges, or may be a transparent panel or film having ruggedness constituted of many pairs of specular surfaces V-shaped or getting away from or close to each other.

### Eleventh Embodiment

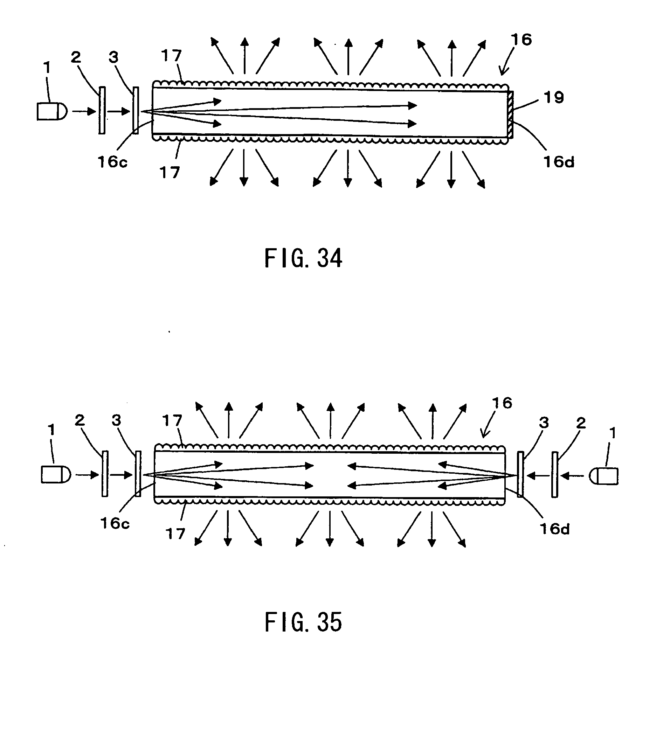

A structure of a lighting apparatus according to the eleventh embodiment is illustrated in FIG. 34. The eleventh embodiment has a structure in which the transparent light diffusion panel 17 is used instead of the flat reflection panel 18 of the lighting apparatus of the tenth embodiment illustrated in FIG. 31 so that the transparent light diffusion panel 17 is placed on each of the pair of opposing principal faces 16a and 16b of the face radiating light radiation structural member 16. Thus, both the principal faces 16a and 16b of the face radiating light radiation structural member 16 have the light radiating face.

Also in this case, it is preferable to place the reflection panel 19 on the deep end face 16d of the face radiating light radiation structural member 16 so that the light flux reaching the reflection panel 19 without being radiated on the way is reflected by the reflection panel 19 so as to travel again in the face radiating light radiation structural member 16.
In addition, as illustrated in FIG. 35, without placing the reflection panel 19 on the deep end face 16d of the face radiating light radiation structural member 16, it is possible to place the light source units independently on the pair of opposing end faces 16c and 16d of the face radiating light radiation structural member 16 so that the flat light flux with high directivity enters from each of the light source unit.

### Twelfth Embodiment

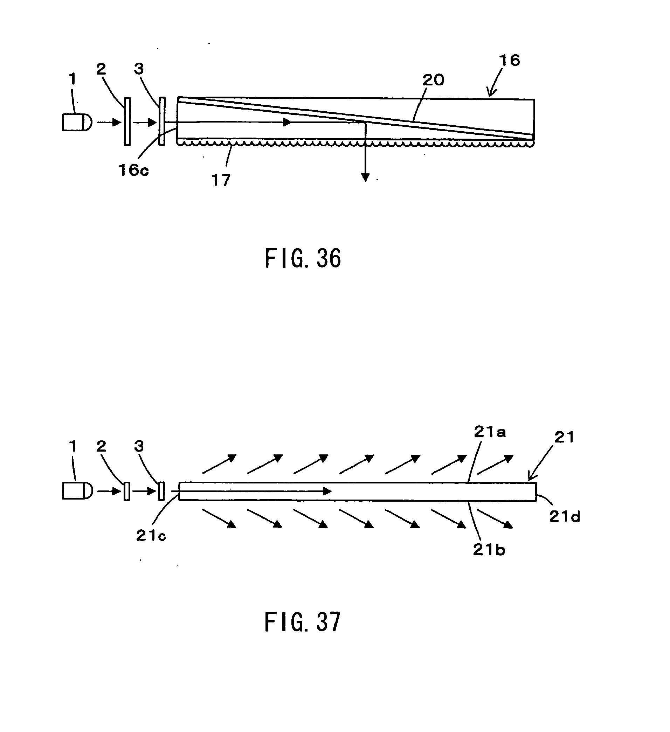

A structure of a lighting apparatus according to the twelfth embodiment is illustrated in FIG. 36. The twelfth embodiment has a structure in which a light diffusion reflection panel 20 is used instead of the flat reflection panel 18 of the lighting apparatus of the ninth embodiment illustrated in FIG. 28. This light diffusion reflection panel 20 has a structure similar to that of the light diffusion transparent panel 17 placed on the principal face 16b of the face radiating light radiation structural member 16 except that at least one of the principal faces has reflecting property, and the light diffusion reflection panel 20 is placed in the orientation such that the longitudinal direction of the linear ridge U becomes substantially perpendicular to the end face 16c of the face radiating light radiation structural member 16.

When such transparent light diffusion panel 20 is used, the light flux entering from the end face 16c of the face radiating light radiation structural member 16 is reflected and diffused by the transparent light diffusion panel 20 and is further diffused by the transparent light diffusion panel 17 to be radiated out. Therefore, radiation of light with very superior uniformity can be obtained.
Further, if the light flux is sufficiently diffused by the light diffusion reflection panel 20, the light diffusion transparent panel 17 on the principal face 16b of the face radiating light radiation structural member 16 can be omitted.
In the same manner, the light diffusion reflection panel 20 can be used instead of the flat reflection panel 18 also in the tenth and eleventh embodiments.

In the ninth to twelfth embodiments, instead of the transparent light diffusion panel 17 described in the ninth embodiment, it is possible to use a stack of two panels similar to the transparent light diffusion panel 17, which are stacked in the state where the longitudinal directions of the linear ridges thereof cross with each other. Alternatively, the two plates may be formed integrally, and a pair of principal faces thereof may be provided with linear ridges respectively so that the longitudinal directions thereof cross each other. In any case, one of the crossing linear ridges is located so that the longitudinal direction of the linear ridges is parallel to the end face 16c. In addition, it is preferable to place the light diffusion transparent panel 17 having the linear ridges crossing the end face 16c or the principal face inside the face radiating light radiation structural member 16.

### Third Embodiment

A structure of a lighting apparatus according to a third embodiment is illustrated in FIG. 37. The third embodiment has a structure in which a light guide panel 21 is used as the face radiating light radiation structural member 16 of the lighting apparatus of the ninth embodiment illustrated in FIG. 27.

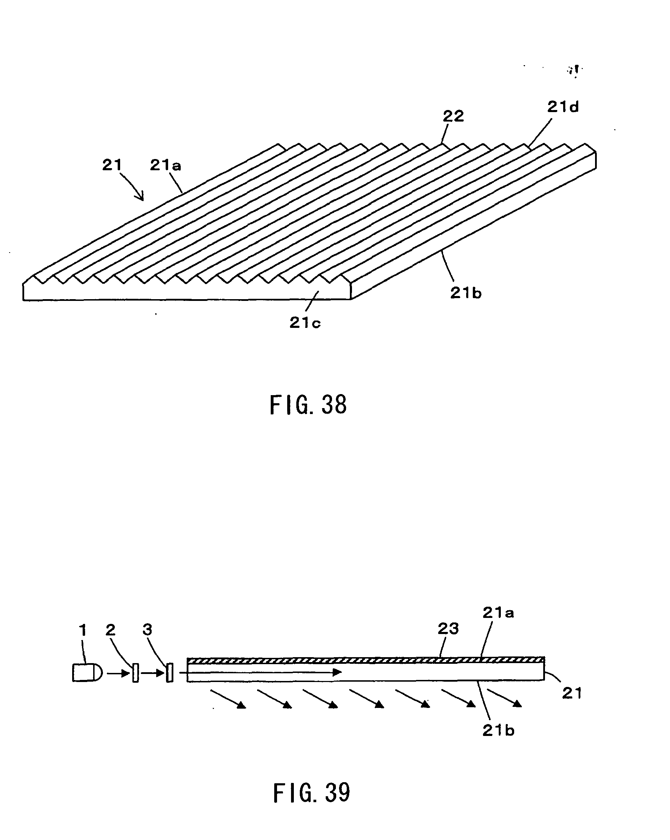

The light guide panel 21 has a pair of principal faces 21a and 21b that respectively have practically specular surfaces and are opposed to each other, and an end surface 21c is panel to face the light source unit. As illustrated in FIG. 38, many projection-depression surfaces 22 are formed to extend in the direction substantially perpendicular to the end face 21c on at least one of the principal faces 21a and 21b of the light guide panel 21. Those projection-depression surfaces 22 are obtained by forming linear ridges or grooves having a peripheral cross section of a crest or valley contour on the surface of the light guide panel 21. Proximity or a space between the linear ridges or grooves are selected so as to adjust light amount emitted from the principal faces 21a and 21b on the way as the light goes forward from the end face 21c to the opposing end face 21d. Even if the shape, the size and the space of the linear protrusion or the groove are constant, a ratio of the light emission can be adjusted by selecting a thickness of the light guide panel 21.

The rugged surfaces 22 of the light guide panel 21 have an action similar to that of the rugged surfaces 9 of the light guide member 8 illustrated in FIG. 15. The light flux entering the end face 21c of the light guide panel 21 is reflected repeatedly between the principal faces 21a and 21b so as to meander and propagate toward the end face 21d. In this case, since the light flux enters the rugged surfaces 22 in a slanting direction, the incident angle of the light gradually increases as the reflection is repeated. If the incident angle of the light is smaller than the critical angle determined by the relationship between refractive indices of the light guide panel 21 and the ambient air, the principal faces 21a and 21b are reflection surfaces for the total internal reflection. However, if the incident angle of the light exceeds the critical angle, the principal faces 21a and 21b become light emitting surfaces for emitting the light to the outside of the light guide panel 21.
Thus, the principal faces 21a and 21b of the light guide panel 21 can emit uniform illumination light.

In addition, instead of the light guide panel 21, it is possible to use the tubular structural member as illustrated in FIG. 23, which includes a pair of thin panel portions 32 and 33 opposed to each other. The opposing inside surfaces 32a and 33a of the thin panel portions 32 and 33 respectively constitute the practically specular surface. The surface 32a of the thin panel part 32 is provided with projection-depression surfaces 34 constituted of many V-shaped cross section or many expanding or narrowing specular surface pairs arrayed in parallel to each other so that the array is developed in the width direction of the tubular structural member 31, which extends in the direction perpendicular to the width direction of the tubular structural member 31. At least one of the pair of thin panel portions 32 and 33 is the light emitting surface.
In addition, if a thickness of the light guide panel 21 is decreased as being away from the light incident end, light emission amount while the light goes forward toward the other end can be increased compared with the light guide panel in which the pair of principal faces are parallel to each other. Similarly, if a space between the pair of principal faces of the tubular structural member is decreased as being away from the light incident end, the light emission amount while the light goes forward toward the other end can be increased compared with the tubular structural member in which the pair of principal faces are parallel to each other.

Further, instead of the light guide panel 21, it is possible to use the stacked light guide member 8 and the stacked tubular structural member 31 as illustrated in FIGS. 24(a), 24(b), 24(c), 25, 26(a), 26(b), and 26(c). In such stack, if the inner convex peaks of the projections and depressions of the tubular structural member 31 contact with the facing surface, the panel having the projections and depressions is stacked sandwiching a flat panel therebetween.
Further, it is possible to use a stack in which at least one light guide panel 21 and at least one tubular structural member 31 are stacked on each other. In such stack, every surface including the inside of the stack except the outer peripheral reflection surface has the transparency property. However, if both the pair of outside principal faces are light emitting surfaces, one surface in the stack is not required to have the transparency property.

### Fourteenth Embodiment

A structure of a lighting apparatus according to the fourteenth embodiment is illustrated in FIG. 39. The fourteenth embodiment has a structure in which a reflection surfaces 23 is formed on the principal surface 21a of the light guide panel 21 of the lighting apparatus of the third embodiment illustrated in FIG. 37. According to this structure, only the other principal surface 21b is made to be the light emitting surface.
Note that the reflection surfaces 23 can be obtained by forming a reflection film on the principal surface 21a of the light guide panel 21 or by placing a reflection panel along the principal surface 21a of the light guide panel 21.
In addition, it is possible to constitute the reflection surface 23 of a reflection panel made of aluminum, for example, and to connect the reflection panel directly or indirectly to a heat generating part of the LED lamp 1 of the light source unit, and hence heat generated by the LED lamp 1 can be dispersed effectively.

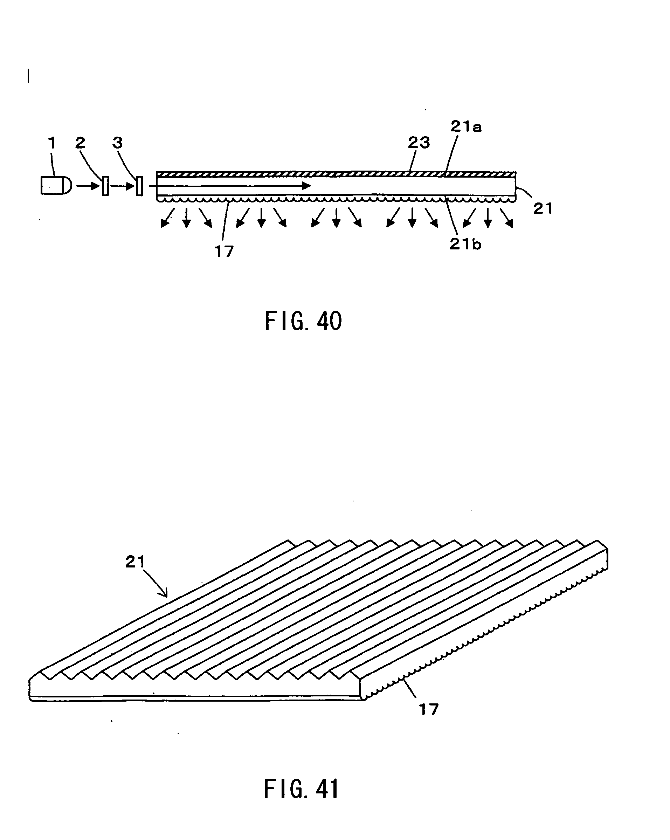

In addition, as illustrated in FIG. 40, it is possible to dispose the light diffusion transparent panel 17 on the principal surface 21b of the light guide panel 21 serving as the light emitting surface. The light diffusion transparent panel 17 is displaced so that the longitudinal direction of the linear ridge U thereof is parallel to the end face 21c of the light guide panel 21. Thus, light radiated from the principal face 21b of the light guide panel 21 is dispersed in the transparent light diffusion panel 17, and hence more uniform illumination light can be obtained.
Further, in this case, as illustrated in FIG. 41, the light guide panel 21 and the transparent light diffusion panel 17 may be formed integrally. If the tubular structural member 31 illustrated in FIG. 26 is used instead of the light guide panel 21, the transparent light diffusion panel 17 may be located or formed integrally with the same similarly. Further, the transparent light diffusion panel 17 may have a film shape.

### Fifteenth Embodiment

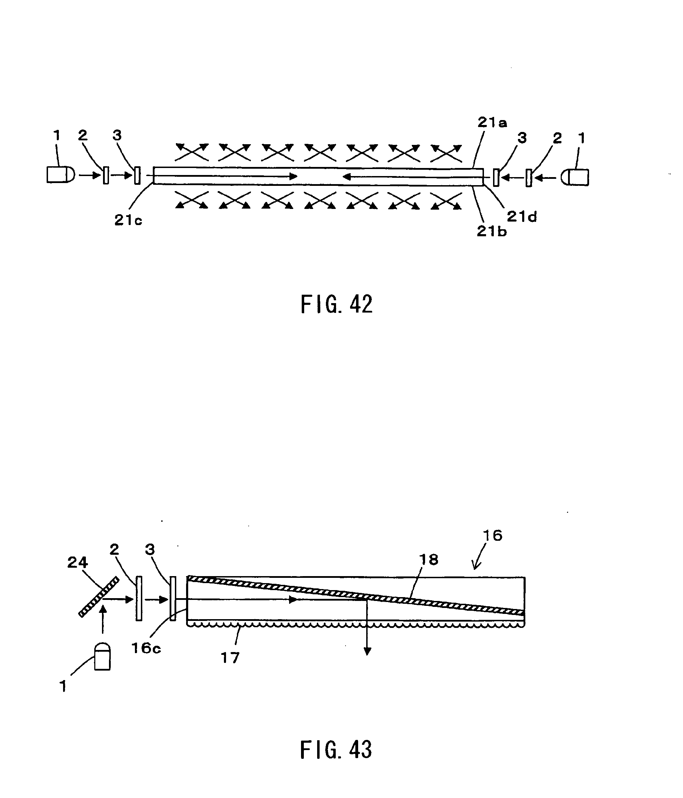

A structure of a lighting apparatus according to the fifteenth embodiment is illustrated in FIG. 42. The fifteenth embodiment has a structure in which the light source units are placed so as to be opposed to each other not only on the end face 21c but also on the other end face 21d of the light guide panel 21 independently in the lighting apparatus of the third embodiment illustrated in FIG. 37 so that the flat light flux having high directivity enters the light guide panel 21 from each of the light source unites. Thus, it is possible to realize the lighting apparatus having higher luminance or the lighting apparatus having a larger light emitting surface.
Similarly, in the lighting apparatus of the twelfth embodiment, it is possible to place the light source unit also on the end face 21d of the light guide panel 21 independently in an opposed manner, and hence the flat light fluxs having high directivity enters the light guide panel 21 from each of the light source unites.

### Sixteenth Embodiment

A structure of a lighting apparatus according to the sixteenth embodiment is illustrated in FIG. 43. The sixteenth embodiment has a structure in which a reflection panel 24 is placed in front of the first light diffusion structural member 2 in a slanting direction instead of placing the LED lamp 1, the first light diffusion structural member 2, and the second light diffusion structural member 3 linearly in the lighting apparatus of the ninth embodiment illustrated in FIG. 28. Thus, the light flux from the LED lamp 1 is reflected by the reflection panel 24 and then enters the first light diffusion structural member 2.

Using such the reflection panel 24, flexibility of a position in which the LED lamp 1 is placed can be improved so that a more user-friendly lighting apparatus can be realized.
In the same manner, it is possible to use the reflection panel 24 in the lighting apparatuses of the tenth to fifteenth embodiments, and hence the light flux from the LED lamp 1 is reflected by the reflection panel 24 and then enters the first light diffusion structural member 2.

Note that the light guide panel 21 having the rugged surfaces 22 can be made of a material such as glass or resin being transparent in the lighting apparatuses according to the thirteenth to sixteenth embodiments. It is also possible to form the outer peripheral part including the rugged surfaces 22 of a transparent film or the like, and to form the inside thereof as an air layer, and hence the light flux goes forward in the air layer and then enters the rugged surfaces 22.
Further, the light source unit according to the first embodiment is used in the lighting apparatuses according to the ninth to sixteenth embodiments, but this structure is not a limitation. It is possible to use the light source units according to the second to eighth embodiments in the lighting apparatuses according to the ninth to sixteenth embodiments.

If the light flux control means of the light source unit and the face radiating light radiation structural member of the lighting apparatus have the rugged surfaces of the same shape and the same size, the light flux control means and the face radiating light radiation structural member may be formed integrally.
In this case, it is preferable that the outer circumference of the light flux control means does not have the tranparency property. On the other hand, the light emitting surface and every inside surface of the face radiating light radiation structural member must have the transparency property. However, if both the pair of principal faces radiate light in the aforementioned stack structure, only one surface in the stack is not required to have the transparent property.

### Seventeenth Embodiment

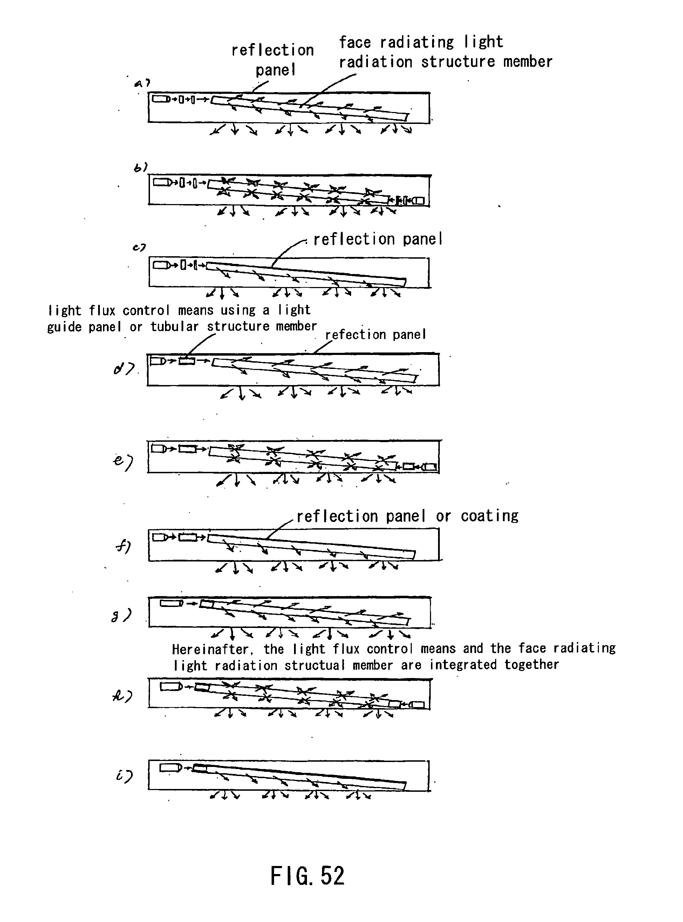

A structure of a light flux control means and a lighting apparatus according to a seventeenth embodiment is illustrated in FIGS. 52.
The seventeenth embodiment has a structure of placing the light guide panel or the tubular structural member, or a stacked body thereof, or a stacked body of the light guide panel and the tubular structural member constituting the face radiating light radiation structural member to be tilted with respect to the principal surface of a surface lighting apparatus by a predetermined angle, to thereby obtain a lighting unit having a higher light flux control means or higher output ratio. This is obtained because the light flux having higher directivity from the light source is projected to the many V-shaped cross section or many pairs of specular surfaces getting away or close to each other of the light guide panel or the tubular structural member with higher probability.
The same array can be applied to the structure in which the light flux control means and the face radiating light radiation structural member are formed integrally as described above.

### Eighteenth Embodiment

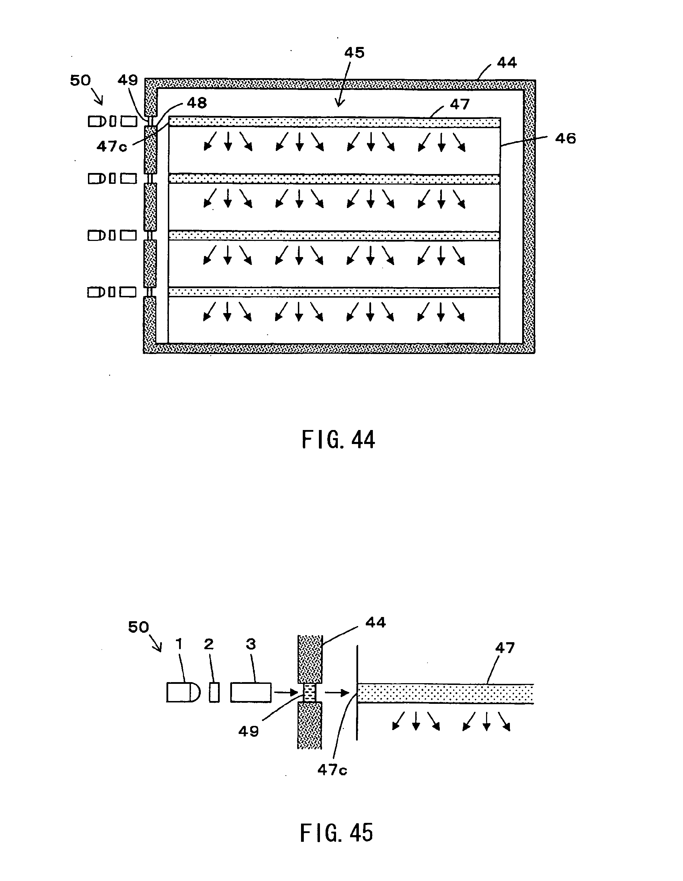

A structure of a plant growing equipment according to an eighteenth embodiment is illustrated in FIG. 44. A plant growing shelf unit 45 is placed in a thermal insulation chamber 44 covered with thermal insulation walls. The inside of the thermal insulation chamber 44 is structured to be adjusted to have predetermined temperature and humidity with an air conditioning system (not shown). The plant growing shelf unit 45 includes a plurality of plant growing shelves 46, and the face radiating light radiation structural member 47 of the lighting apparatus according to any one of the ninth, tenth, twelfth, and fourteenth to seventeenth embodiments described above is placed above each of the plant growing shelves 46 with the light emitting surface facing downward. A side wall of the thermal insulation chamber 44 is provided with lighting windows 48 for the light flux to enter the face radiating light radiation structural members 47 located above the plant growing shelves 46, respectively, from the outside of the thermal insulation chamber 44. The lighting windows 48 are formed at positions corresponding to the face radiating light radiation structural members 47, respectively, and an optical transparent panel 49 made of a material having high thermal insulating property is fit in each of the lighting windows 48.

The light source units 50 according to any one of the ninth, tenth, twelfth, and fourteenth to seventeenth embodiments are placed outside the thermal insulation chamber 44, corresponding to the lighting windows 48, respectively.
Note that the position and the orientation of the plant growing shelf unit 45 in the thermal insulation chamber 44, and the attachment position and orientation of the face radiating light radiation structural member 47 with respect to the plant growing shelf unit 45 are set so that a light receiving end 47c of the face radiating light radiation structural member 47 can receive the maximum amount of the light flux supplied through the lighting window 48.

As illustrated in FIG. 45, when the flat light flux having high directivity is emitted from each of the light source unites 50, the light flux passes through the transparent panel 49 in the lighting window 48 and enters the light receiving end 47c of the face radiating light radiation structural member 47, and hence the face radiating light radiation structural member 47 emits the illumination light that is uniform over the entire surface of the plant growing shelf 46 of the plant growing shelf unit 45. Thus, the plants placed on the plant growing shelf 46 are grown.
In this case, since the light emitting member in particular of the light source unit 50 is located outside the thermal insulation chamber 44, heat generated by the light emitting member can be prevented from reaching the inside of the thermal insulation chamber 44. Thus, a degree of cooling operation by the air conditioning system can be decreased substantially, and hence temperature and humidity in the thermal insulation chamber 44 can be made stable.
Further, since the light flux received by the face radiating light radiation structural member 47 is a flat light flux, the face radiating light radiation structural member 47 can be very thin, and hence more plant growing shelves 46 can be incorporated in the plant growing shelf unit 45.

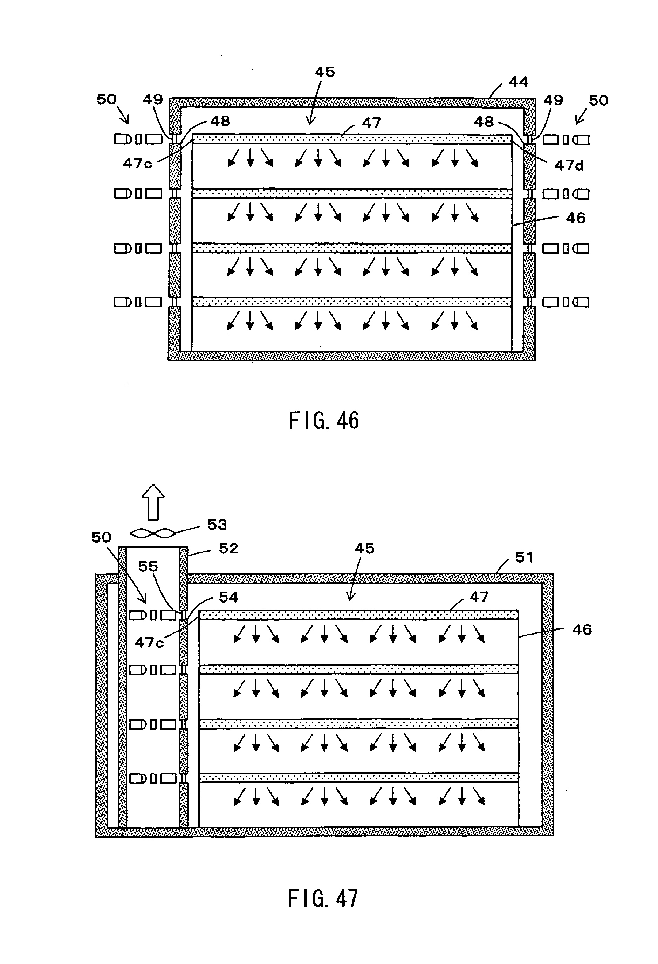

In addition, as illustrated in FIG. 46, it is possible to form the lighting windows 48 with the optical transparent panels 49 fitted therein on a pair of side walls opposed to each other of the thermal insulation chamber 44 and to places the light source unites 50 at the outsides of the lighting windows 48, respectively and independently so as to be opposed to each other, and hence the flat light fluxs having high directivity emitted from the light source units 50 on both sides enter the end faces 47c and 47d of the face radiating light radiation structural member 47 in the thermal insulation chamber 44.

### Nineteenth Embodiment

A structure of the plant growing equipment according to the nineteenth embodiment is illustrated in FIG. 47. The plant growing shelf unit 45 is located in a thermal insulation chamber 51 covered with the thermal insulation walls. Inside the thermal insulation chamber 51, a thermal insulation pipe 52 is located to stand next to the plant growing shelf unit 45. The upper end of the thermal insulation pipe 52 protrudes externally from the thermal insulation chamber 51 and is provided with an air exhausting fan 53. The side wall of the thermal insulation pipe 52 is provided with lighting windows 54 formed at positions corresponding to positions of the face radiating light radiation structural members 47 of the plant growing shelf unit 45, and an optical transparent panel 55 made of a material having high thermal insulating property is fit in each of the lighting windows 54. Further, the light source unites 50 of the lighting apparatus are located corresponding to the lighting windows 54, respectively, in the thermal insulation pipe 52.

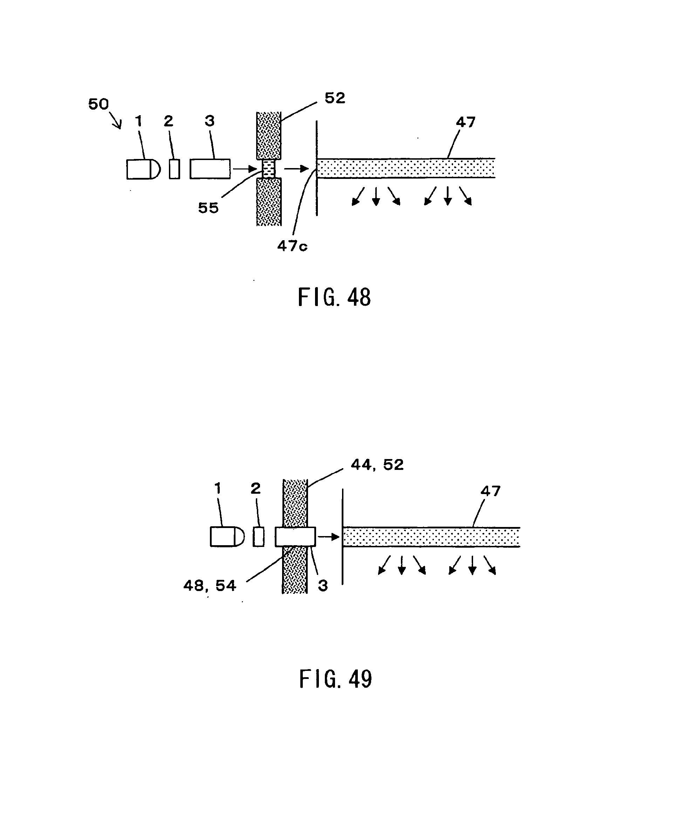

As illustrated in FIG. 48, when the flat light flux having high directivity is emitted from each of the light source unites 50, the light flux passes through the transparent panel 55 in the lighting window 54 and enters the light receiving end 47c of the face radiating light radiation structural member 47, and hence the face radiating light radiation structural member 47 emits the illumination light that is uniform over the entire surface of the plant growing shelf 46 of the plant growing shelf unit 45. Thus, the plants placed on the plant growing shelf 46 are grown.
In this case, since the light emitting member in particular of the light source unit 50 is located inside the thermal insulation pipe 52, heat generated by the light emitting member can be prevented from reaching the plant growing shelf unit 45. Thus, a degree of cooling operation by the air conditioning system can be decreased substantially, and hence temperature and humidity in the thermal insulation chamber 51 can be made stable. Note that heat generated by the light emitting member is discharged from the upper end of the thermal insulation pipe 52 when the air exhausting fan 53 is driven.

Further, in the nineteenth embodiment too, it is possible to place the thermal insulation pipes 52 to stand on both sides of the plant growing shelf unit 45 and to place the light source units 50 in the thermal insulation pipes 52, and hence the flat light fluxes having high directivity are emitted from the light source units 50 in both the thermal insulation pipes 52 and enter the end faces 47c an 47d of the face radiating light radiation structural member 47.

Further, in the eighteenth and nineteenth embodiments described above, when the lighting window 48 or 54 may be formed as thin as possible so that air generated by the light emitting member of the light source unit 50 does not flow into the plant growing shelf unit 45 in the thermal insulation chamber 44 or 51 by heat transfer or convection, it is not necessary to fit the optical transparent panel 49 or 55 in the lighting window 48 or 54.

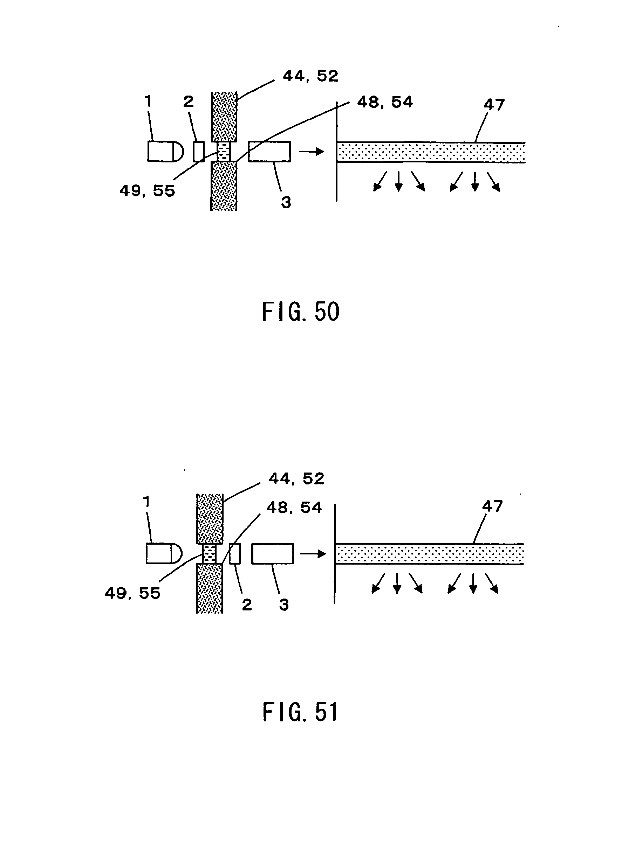

Further, the optical transparent panel 49 or 55 of the lighting window 48 or 54 is placed between the light source unit 50 and the face radiating light radiation structural member 47 in the eighteenth and nineteenth embodiments described above, but it is sufficient if the heat insulation is realized at least between the light emitting member and the face radiating light radiation structural member 47 of the light source unit 50.
For instance, as illustrated in FIG. 49, the light flux control means constituted of the second light diffusion structural member 3 and the like of the light source unit 50 may be made of a material having high thermal insulating property and may be fit in the lighting window 48 or 54. Further, as illustrated in FIG. 50, it is possible to dispose the optical transparent panel 49 or 55 of the lighting window 48 or 54 between the first light diffusion structural member 2 and the second light diffusion structural member 3 of the light source unit 50. Further, as illustrated in FIG. 51, the optical transparent panel 49 or 55 of the lighting window 48 or 54 may be located between the light emitting member such as the LED lamp 1 and the first light diffusion structural member 2 of the light source unit 50.

As the light emitting member of the light source unit 50 in the eighteenth and nineteenth embodiments described above, an LED lamp of high energy efficiency and high output power that produces light quantity of 70 lumens with respect to power consumption of 1 watt, for example, can be used. Otherwise, a laser beam oscillator may be used.

## Claims

**1.** A light source unit comprising:
a flat light flux supplying means having a light emitting member, for supplying a light flux that is flat along a predetermined plane and has a predetermined diverging angle; and
a light flux control means for suppressing diffusion of the light flux directed from the flat light flux supplying means, along the aforementioned predetermined plane to form a flat light flux having high directivity.

**2.** A light source unit according to claim 1, wherein the flat light flux supplying means comprises:
an LED lamp or a laser beam oscillator that constitutes the light emitting member and emits light along at least the aforementioned plane; and
a first light diffusion structural member placed in front of the LED lamp or the laser beam oscillator, for redirecting the light emitted from the LED lamp or the laser beam oscillator diffused in the aforementioned predetermined plane; and
the first light diffusion structural member is a panel-type or film-type structural member having at least transparency property or reflection property, and has many linear ridges arrayed in parallel to each other in a substantially close manner on at least one principal face so that the array is developed in the width direction of the first light diffusion structural member, the cross section of the each linear ridge perpendicular to the longitudinal direction of the linear ridge forms a part of substantially circular shape, the surfaces of the linear ridges are practically specular, and the linear ridges are positioned to be substantially perpendicular to the aforementioned predetermined plane.

**3.** A light source unit according to claim 2, wherein the first light diffusion structural member is bent or curved to be convex with respect to the light flux control means.

**4.** A light source unit according to claim 2 or 3, comprising:
a plurality of the LED lamps or laser beam oscillators placed on the aforementioned predetermined plane; and a plurality of the first light diffusion structural members placed correspondingly to the plurality of the LED lamps or laser beam oscillators, respectively.

**5.** A light source unit according to claim 4, wherein the plurality of the first light diffusion structural members are formed integrally.

**6.** A light source unit according to claim 1, wherein the flat light flux supplying means comprises:
the light emitting member like a straight tube extending along the aforementioned predetermined plane; and
a reflection member placed behind the light emitting member, for reflecting the light emitted from the light emitting member so as to direct the light along the aforementioned predetermined plane.

**7.** A light source unit according to any one of claims 1 to 6,
wherein:
the light flux control means comprises a second light diffusion structural member placed in front of the flat light flux supplying means, for redirecting the light flux supplied from the flat light flux supplying means diffused in the aforementioned predetermined plane; and
the second light diffusion structural member is a panel-type or film-type structural member having at least transparency property or optical reflection property, and has many linear ridges arrayed in parallel to each other in a substantially close manner on at least one principal face , so that the array is developed in the width direction of the second light diffusion structural member, wherein the cross section of each linear ridge perpendicular to the longitudinal direction of the linear ridges substantially forms a part of a substantially circular shape, the surfaces of the linear ridges are practically specular, and the linear ridges are positioned to be substantially perpendicular to the aforementioned predetermined plane.

**8.** A light source unit according to any one of claims 1 to 7,
wherein:
the light flux control means comprises a panel-type light guide member that is placed in front of the flat light flux supplying means and has a pair of principal faces extending along the aforementioned predetermined plane; and
many rugged surfaces having V-shaped cross sections are arrayed in parallel to each other on one of the principal face of the light guide member so that the array is developed in the width direction of the light guide member, and are extended in the direction perpendicular to the width direction of the light guide member; and
the pair of principal faces of the light guide member have reflection characteristics for the light flux from the flat light flux supplying means entering between the pair of principal faces.

**9.** A light source unit according to claim 8, wherein the light guide member is a panel-type or film-type structural member having transparency property.

**10.** A light source unit according to claim 8, wherein the light flux control means is formed in a stack in which a plurality of the light guide members are stacked.

**11.** A light source unit according to any one of claims 1 to 10,
wherein:
the light flux control means comprises a tubular structural member placed in front of the flat light flux supplying means and having a pair of thin panel portions extending in the aforementioned predetermined plane; and
the inner surfaces of the pair of thin panel portions facing each other are practically specular surfaces; and
one of the inner surfaces of the pair of thin panel portions facing each other is provided with many rugged surfaces having V-shaped cross sections or many pairs of surfaces of projections or depressions getting away from or close to each other arrayed in parallel to each other so that the array is developed in the width direction of the tubular structural member, and are extended in the direction perpendicular to the width direction of the tubular structural member; and
the inner surfaces of the pair of thin panel portions facing each other have reflection characteristics for the light flux entering between the surfaces from the flat light flux supplying means.

**12.** A light source unit according to claim 11, wherein the light flux control means is formed in a stack in which a plurality of the tubular structural members are stacked.

**13.** A lighting apparatus comprising:
the light source unit according to any one of claims 1 to 12; and
a face radiating box-type or panel-type light radiation structural member having a pair of principal faces opposed to each other and an end face so that the light flux entering the end face from the light source unit is radiated out from at least one of the principal faces.

**14.** A lighting apparatus according to claim 13, wherein the face radiating light radiation structural member has a transparent light diffusion panel or film that is placed on one of the principal faces and forms a light radiating face, and a reflection panel that is placed in parallel to the transparent light diffusion panel or film or in an inclined manner with a predetermined angle.

**15.** A lighting apparatus according to claim 13, wherein the face radiating light radiation structural member has a pair of transparent light diffusion panels, each of which is placed on each of the principal faces and forms a light radiating face.

**16.** A lighting apparatus according to claim 14, wherein the reflection panel is constituted of the third light diffusion structural member that is a panel-type or film-type structural member having optical reflection property, and has many linear ridges arrayed in parallel to each other in a substantially close manner on a reflection face so that the array is developed in the width direction of the face radiating light radiation structural member, the cross section of the linear ridges perpendicular to the longitudinal direction of the linear ridges forms a part of a substantially circular shape, and the surfaces of the linear ridges are practically specular surfaces.

**17.** A lighting apparatus according to any one of claims 13 to 16, wherein the aforementioned face radiating light radiation structural member has a rugged surface having many V-shaped cross sections, or being constituted of many pairs of surfaces of projections and depressions, getting away from or close to each other, arrayed in parallel to each other on at least one of a panel placed between the pair of the principal faces, in parallel to them or in an inclined manner with a predetermined angle so that the array is developed in the width direction of the aforementioned face radiating light radiation structural member, and extended in the direction perpendicular to the width direction of the face radiating light radiation structural member, and the projection-depression surfaces are practically specular surfaces.

**18.** A lighting apparatus according to claim 17, wherein the face radiating light radiation structural member is constituted of a light guide panel having a pair of principal faces that are practically specular surfaces, and comprises many V-grooves, linear ridges having V-shaped cross sections, or projections and depressions with many pairs of surfaces getting away from or close to each other, arrayed in parallel to each other on at least one of the principal faces so that the array is developed in the width direction of the face radiating light radiation structural member, and extend along the principal face, and the surface of the V-grooves, the linear ridges, or the projections and depressions is a practically specular surface.

**19.** A lighting apparatus according to claim 18, wherein the (inner) surface of the V-grooves, the linear ridges, or the projections and depressions constitutes the aforementioned reflection surface that causes total internal reflection if an incident angle of light entering the (inner) surface of the V-groove, the linear ridge, or the projections and depressions is smaller than the critical angle in the travelling through the light guide panel, while it radiates light to the outside of the light guide panel if the incident angle of the light exceeds the critical angle.

**20.** A lighting apparatus according to claim 18 or 19, wherein the reflection surface is formed on one of the principal face of the light guide panel.

**21.** A lighting apparatus according to claims 13 to 20,
wherein the face radiating light radiation structural member comprises the aforementioned light guide panel or a face with aforementioned ruggedness of many surfaces V-shaped or getting away from or close to each other, tilted with a predetermined angle with respect to the principal face which is to be the light radiating face of the lighting apparatus according to claims 13 to 20. 22. A lighting apparatus according to any one of claims 13 to 21, wherein the light flux control means using the aforementioned light guide panel or the aforementioned rugged surface, and the face radiating light radiation structural member using the aforementioned light guide panel or the aforementioned rugged surface are formed integrally.

**23.** A lighting apparatus according to any one of claims 18 to 22, wherein the transparent light diffusion panel is placed on the light radiating face of the light guide panel.

**24.** A lighting apparatus according to claim 23, wherein the aforementioned light guide panel and the aforementioned transparent light diffusion panel are formed integrally.

**25.** A lighting apparatus according to any one of claims 14 to 24, wherein the aforementioned transparent light diffusion panel is constituted of the fourth light diffusion structural member that is a panel-type or film-type structural member transparency property, and has many linear ridges arrayed in parallel to each other in a substantially close manner on at least one of the principal face so that the array is developed in the direction perpendicular to the width direction of the aforementioned transparent light diffusion panel, a cross section of the linear ridge perpendicular to the longitudinal direction of the linear ridge substantially forms a part of a substantially circular shape, and the surfaces of the linear ridges are practically specular surfaces.

**26.** A lighting apparatus comprising:
the light source unit according to claim 8; and
a panel-type face radiating light radiation structural member having a pair of principal faces opposed to each other and an end face, for radiating the light flux entering the end face, from the light source unit out from at least one of the principal face, wherein the light guide member of the light source unit also works as the face radiating light radiation structural member.

**27.** A lighting apparatus according to any one of claims 13 to 26, which is used as a backlight.

**28.** A plant growing equipment comprising:
the lighting apparatus according to any one of claims 13 to 26; and
a thermal insulation chamber covered with thermal insulation walls, and having a lighting window formed on a part of the thermal insulation walls and plant growing shelves formed in the chamber,
wherein at least the aforementioned light emitting member of the aforementioned light source units used in the lighting apparatus are placed outside the thermal insulation chamber so as to supply the light flux to the inside of thermal insulation chamber through the lighting window, and the aforementioned face radiating light radiation structural members of the lighting apparatuses are placed in the thermal insulation chamber so as to radiate the light flux from the light source unit towards the plant growing shelves.
